# EUROPEAN PATENT APPLICATION

(11) **EP 4 847 263 A1**
(43) Date of publication of application: **02.12.2026**
(21) Application number: 26180902.4
(22) Date of filing: 26.05.2026
(51) Int. Cl.: B41J 3/407, H04N 1/387

(54) **PRINTING METHOD, PRINTING APPARATUS, AND NON-TRANSITORY COMPUTER-READABLE STORAGE MEDIUM STORING PROGRAM**

(30) Priority: 27.05.2025 JP 2025087773
(71) Applicant: Seiko Epson Corporation, Tokyo 160-8801 (JP)
(72) Inventor: TAKISHIMA, Keigo, Suwa-shi 392-8502 (JP)
(74) Representative: Lewis Silkin LLP

(57) **Abstract**

A printing method for printing an image on a medium having a pattern includes a preparation step and a production step. The production step prints, on a medium, a print image corrected based on a deviation for each feature point obtained by performing matching processing on a pattern captured image using a feature point of a pattern. In the preparation step, the feature point is set. The preparation step includes acquiring a pattern image and setting the feature point in the acquired pattern image. The setting of the feature point includes assigning a plurality of feature point candidates to the pattern image, calculating matching degrees at a plurality of positions for each of a plurality of feature point candidates by performing matching processing for each of the feature point candidates in the pattern image, and setting, as the feature point, the feature point candidate, the matching degree of which satisfies a predetermined condition, among the plurality of feature point candidates.

## Description

The present application is based on, and claims priority from JP Application Serial Number 2025-087773, filed May 27, 2025, the disclosure of which is hereby incorporated by reference herein in its entirety.

### BACKGROUND

### 1. Technical Field

The present disclosure relates to a printing method, a printing apparatus, and a non-transitory computer-readable storage medium storing a program.

### 2. Related Art

For example, JP-A-2021-84359 discloses a printing method for printing an image on a stretchable medium such as a patterned fabric. This printing method includes an imaging step of imaging a medium and a correcting step of comparing registered pattern image data and captured image data to extract a pattern area and correcting colored image data (an example of a print image) to match the shape of the extracted pattern area. By printing, on the medium, the colored image that is based on the corrected colored image data, it is possible to perform appropriate printing considering distortion of the medium.

JP-A-2021-84359 is an example of the related art.

However, in the printing method described in JP-A-2021-84359, it is not easy to accurately extract the pattern of the medium. For this reason, it is desired to improve the correction accuracy of the print image printed according to the pattern of the medium.

### SUMMARY

According to an aspect of the present disclosure, there is provided a printing method of a printing apparatus that prints an image on a medium having a pattern, the printing method including: a production step of printing, on the medium, a print image corrected based on a deviation for each feature point of a pattern image indicating an image of the pattern without distortion, the deviation being obtained by performing, using the feature point, matching processing on a pattern captured image obtained by imaging the medium at a position before printing; and a preparation step of setting the feature point before the production step, wherein the preparation step includes: acquiring the pattern image; and setting the feature point in the acquired pattern image, and the setting the feature point includes: assigning a plurality of feature point candidates to the pattern image; calculating matching degrees at a plurality of positions for each of the plurality of feature point candidates by performing the matching processing on each of the feature point candidates in the pattern image; and setting, as the feature point, the feature point candidate, the matching degree of which satisfies a predetermined condition, among the plurality of feature point candidates.

According to an aspect of the present disclosure, there is provided a printing apparatus that prints an image on a medium having a pattern, the printing apparatus including: a conveyance unit configured to convey the medium; an imaging unit configured to acquire a pattern captured image by imaging the pattern of the medium conveyed by the conveyance unit; a feature point setting unit configured to set a feature point in a pattern image indicating an image of the pattern without distortion; an image correcting unit configured to correct a print image based on a deviation for each feature point between the pattern image and the pattern captured image; and a printing unit configured to print the corrected print image on the medium conveyed by the conveyance unit, wherein the feature point setting unit includes: a feature point candidate assigning unit configured to assign a plurality of feature point candidates to the pattern image; a matching degree acquiring unit configured to acquire matching degrees at a plurality of positions for each of the feature point candidates by performing matching processing on each of the plurality of feature point candidates in the pattern image; and a determination unit configured to determine whether the matching degrees at the plurality of positions satisfy a predetermined condition, and the feature point candidate, the matching degree of which satisfies the predetermined condition, among the plurality of feature point candidates is set as the feature point.

According to an aspect of the present disclosure, there is provided a non-transitory computer-readable storage medium storing a program for causing a computer to execute processing of setting setting information used to correct a print image used when a printing apparatus, which prints an image on a medium having a pattern, prints the image, the printing apparatus including: an imaging unit configured to image the medium before printing to acquire a pattern captured image; and a printing unit configured to print, on the medium, a print image corrected based on a deviation for each feature point obtained by matching processing on the pattern captured image using the feature point of the pattern, the program causing the computer to execute processing of setting the feature point as the setting information and including: causing the computer to acquire a pattern image indicating an image of the pattern without distortion; and set the feature point in the acquired pattern image, and, in the setting of the feature point, causing the computer to assign a plurality of feature point candidates to the pattern image; calculate matching degrees at a plurality of positions for each of the feature point candidates by performing matching processing on each of the plurality of feature point candidates in the pattern image; and set, as the feature point, the feature point candidate, the matching degree of which satisfies a predetermined condition, among the plurality of feature point candidates.

### BRIEF DESCRIPTION OF THE DRAWINGS

FIG. 1 is a schematic diagram illustrating a printing apparatus in an embodiment.
FIG. 2 is a block diagram illustrating an electric configuration of the printing apparatus.
FIG. 3 is a block diagram illustrating a functional configuration of a control unit.
FIG. 4 is a schematic plan view illustrating a medium having a pattern.
FIG. 5 is a schematic diagram illustrating pattern image data.
FIG. 6 is a schematic diagram illustrating print image data.
FIG. 7 is a schematic diagram illustrating pattern imaging data.
FIG. 8 is a schematic plan view illustrating a medium on which a print image is printed.
FIG. 9 is a schematic diagram illustrating correction processing for a print image corresponding to a distorted pattern.
FIG. 10 is a schematic diagram illustrating feature point setting data.
FIG. 11 is a schematic diagram illustrating matching processing in a production step.
FIG. 12 is a schematic diagram illustrating deviation calculation processing.
FIG. 13 is a schematic diagram illustrating correction processing for a print image based on a deviation.
FIG. 14 is a schematic diagram illustrating feature point candidate assignment data.
FIG. 15 is a schematic diagram illustrating feature point candidate assignment processing.
FIG. 16 is a schematic diagram illustrating matching processing in a preparation step.
FIG. 17 is a graph illustrating a distribution of matching degrees satisfying a predetermined condition.
FIG. 18 is a graph illustrating a distribution of matching degrees not satisfying the predetermined condition.
FIG. 19 is a graph illustrating a distribution of matching degrees not satisfying the predetermined condition.
FIG. 20 is a graph illustrating a distribution of matching degrees not satisfying the predetermined condition.
FIG. 21 is a graph illustrating a distribution of matching degrees not satisfying the predetermined condition.
FIG. 22 is a schematic diagram illustrating matching processing using a first area including feature point candidates satisfying a predetermined condition.
FIG. 23 is a schematic diagram illustrating matching processing using the first area including feature point candidates not satisfying the predetermined condition.
FIG. 24 is a schematic diagram illustrating the matching processing using the first area including the feature point candidates not satisfying the predetermined condition.
FIG. 25 is a graph illustrating determination processing of determining whether the matching degree satisfies the predetermined condition.
FIG. 26 is a graph illustrating an example in which the matching degree does not satisfy the predetermined condition.
FIG. 27 is a graph illustrating the example in which the matching degree does not satisfy the predetermined condition.
FIG. 28 is a schematic diagram illustrating feature point setting data.
FIG. 29 is a flowchart illustrating print processing of implementing a printing method.
FIG. 30 is a flowchart illustrating preparation step processing.
FIG. 31 is a flowchart illustrating production step processing.
FIG. 32 is a schematic diagram illustrating feature point candidate assignment data in a modification.
FIG. 33 is a schematic diagram illustrating pattern image data in a modification.

### DESCRIPTION OF EMBODIMENTS

### First Embodiment

Hereinafter, a printing method, a printing apparatus, and a non-transitory computer-readable storage medium storing a program according to an embodiment are explained. In the following explanation, in a state in which the printing apparatus is installed on a horizontal plane, an axis intersecting the horizontal plane is represented as a Z axis, an axis intersecting the Z axis is represented as an X axis, and an axis intersecting the X axis and the Z axis is represented as a Y axis. A direction along the X axis is represented as a width direction. One of directions along the Y axis is represented as a forward direction Y1 and the other direction is represented as a backward direction Y2. An upward direction along the Z axis is represented as an upward direction Z1 and a downward direction along the Z axis is represented as a downward direction Z2.

### Configuration of a printing apparatus 11

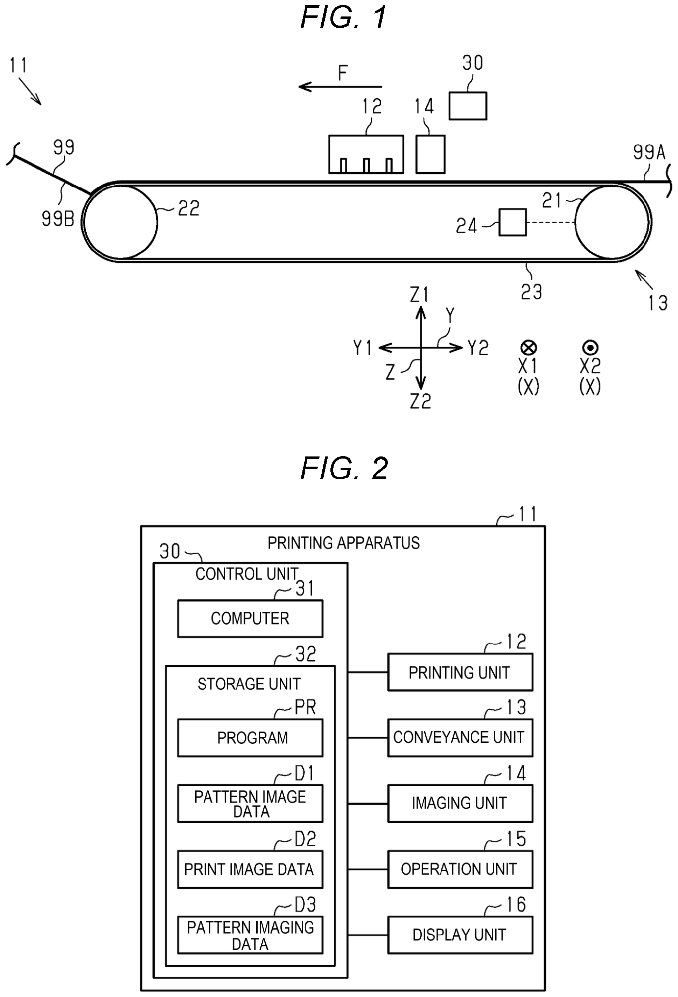

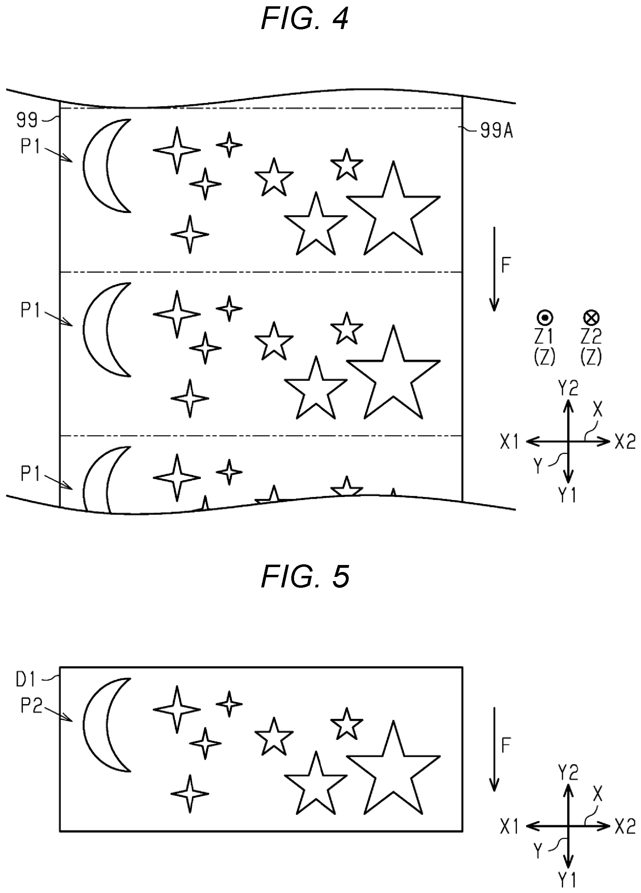

As illustrated in FIG. 1, a printing apparatus 11 performs printing on a medium 99. The printing apparatus 11 prints an image on the medium 99 having a pattern P1 (see FIG. 4). The printing apparatus 11 may be an inkjet printer that performs printing on the medium 99 by ejecting ink onto the medium 99. The medium 99 includes a first surface 99A and a second surface 99B. The second surface 99B is a surface opposite to the first surface 99A.

The medium 99 may be long. The medium 99 may be let out from, for example, a rolled raw material. The medium 99 is not limited to being long and may be a single sheet (sheet paper). The medium 99 may be a fabric.

The printing apparatus 11 includes a printing unit 12. The printing unit 12 may be provided at a position facing a conveyance path for the medium 99. The printing unit 12 may be provided in the upward direction Z1 of the conveyance path for the medium 99. The printing unit 12 may be configured to perform printing on the medium 99 by ejecting ink onto the medium 99. The printing unit 12 may be configured to print an image by ejecting the ink onto the medium 99 having a pattern. The printing unit 12 performs printing on the conveyed medium 99.

The printing unit 12 may include a print head including one or more nozzles for ejecting the ink. The print head is, for example, a serial head but may be a line head. The serial head is a head that scans the medium 99 along the X axis. In this case, the printing unit 12 includes a carriage movable in a width direction X of the medium 99 and a serial head supported by the carriage. The line head is a head capable of simultaneously ejecting the ink over the width direction X of the medium 99. The printing unit 12 is not limited to an inkjet system that performs printing by ejecting the ink.

The printing apparatus 11 includes a conveyance unit 13 that conveys the medium 99. The conveyance unit 13 is configured to convey the medium 99 in a conveyance direction F. The conveyance direction F is a direction intersecting the width direction X of the medium 99. The conveyance direction F may be the horizontal direction. When the conveyance direction F is the horizontal direction, the conveyance direction F may be a direction along the Y axis. The conveyance direction F may be a direction toward the forward direction Y1.

The conveyance unit 13 may include a first roller 21 and a second roller 22. The first roller 21 is located further upstream than the second roller 22 in the conveyance direction F. The first roller 21 is located further upstream than the printing unit 12 in the conveyance direction F. The second roller 22 is located further downstream than the printing unit 12 in the conveyance direction F.

The conveyance unit 13 may include a conveyance belt 23. The conveyance belt 23 is configured to convey the medium 99 in a state of supporting the medium 99. The conveyance belt 23 is an endless belt and is wound around the first roller 21 and the second roller 22. The first roller 21 rotates, whereby the conveyance belt 23 moves along a circling route including the outer circumferences of the first roller 21 and the second roller 22.

The conveyance unit 13 includes a drive unit 24. The drive unit 24 is a drive source for rotating a plurality of rollers 21 and 22. The drive unit 24 may be a motor. The drive unit 24 is coupled to a rotation shaft of the first roller 21 in a power transmittable state but may be coupled to a rotation shaft of the second roller 22 or may be coupled to the rotation shafts of both of the first roller 21 and the second roller 22.

The conveyance unit 13 conveys the medium 99 such that a surface facing the printing unit 12 is a printing surface. The medium 99 has a first surface 99A set as the printing surface and a second surface 99B opposite to the first surface 99A. The medium 99 is set with respect to the conveyance unit 13 in a direction in which the first surface 99A, which is the printing surface, faces the printing unit 12. When the medium 99 is a fabric, the medium 99 may be a woven fabric in which a pattern is expressed by a weaving method. The medium 99 may be a jacquard fabric having a three-dimensional pattern woven by jacquard weaving.

The printing apparatus 11 includes an imaging unit 14. The imaging unit 14 is capable of imaging the medium 99 conveyed by the conveyance unit 13. The imaging unit 14 is provided at a position where the imaging unit 14 is capable of facing the first surface 99A, which is the printing surface of the medium 99. The imaging unit 14 may be provided in the upward direction Z1 of the medium 99. The imaging unit 14 is located further upstream than the printing unit 12 in the conveyance direction F. The imaging unit 14 images the medium 99 at a position before printing. The imaging unit 14 is configured to image a portion of the medium 99 before being printed. The imaging unit 14 images the first surface 99A in an area before printing of the medium 99. When the medium 99 is, for example, a jacquard fabric, a pattern appearing on the first surface 99A with jacquard weaving is imaged. The imaging unit 14 may capture a still image of the medium 99 or may capture a moving image of the medium 99 being conveyed.

The printing apparatus 11 includes a control unit 30. The control unit 30 comprehensively controls the printing apparatus 11. The control unit 30 controls various operations executed in the printing apparatus 11. The control unit 30 controls the printing unit 12, the conveyance unit 13, and the imaging unit 14.

Next, an electric configuration of the printing apparatus 11 is explained with reference to FIG. 2. As illustrated in FIG. 2, the printing unit 12, the conveyance unit 13, the imaging unit 14, an operation unit 15, and a display unit 16 are electrically coupled to the control unit 30. The operation unit 15 is operated when a user gives an instruction to the printing apparatus 11. The control unit 30 receives input information and the like input by the user through the operation of the operation unit 15. At least a part of the operation unit 15 may include a mechanical switch.

The display unit 16 displays a setting screen, a print image, and the like based on display control by the control unit 30. The control unit 30 causes the display unit 16 to display an operation screen or the like including a setting screen on which the user selects a print image, sets print conditions, and gives an instruction to start printing execution. The display unit 16 also displays, for example, a setting screen for the user to designate a registered pattern P2 (see FIG. 5) concerning the pattern P1 of the medium 99 and necessary numerical values. The display unit 16 may be, for example, a touch panel. In this case, at least a part of the operation unit 15 may include an operation function of the touch panel.

The control unit 30 may include one or more computers 31 and one or more storage units 32. The computer 31 may be a processor. The processor may be a central processing unit (CPU). The computer 31 is configured to execute processing based on a program stored in the storage unit 32.

The control unit 30 can be configured as a circuit including α: one or more processors that execute various kinds of processing according to a computer program, β: one or more dedicated hardware circuits that execute at least some of the various kinds of processing, or γ: a combination of α and β. The hardware circuit is, for example, an application specific integrated circuit.

The storage unit 32 includes a computer-readable medium accessible by a general-purpose or dedicated computer. The storage unit 32 stores a program code or a command configured to cause the processor to execute processing. The storage unit 32 is a non-transitory computer-readable medium storing a program but may include a transitory computer-readable medium.

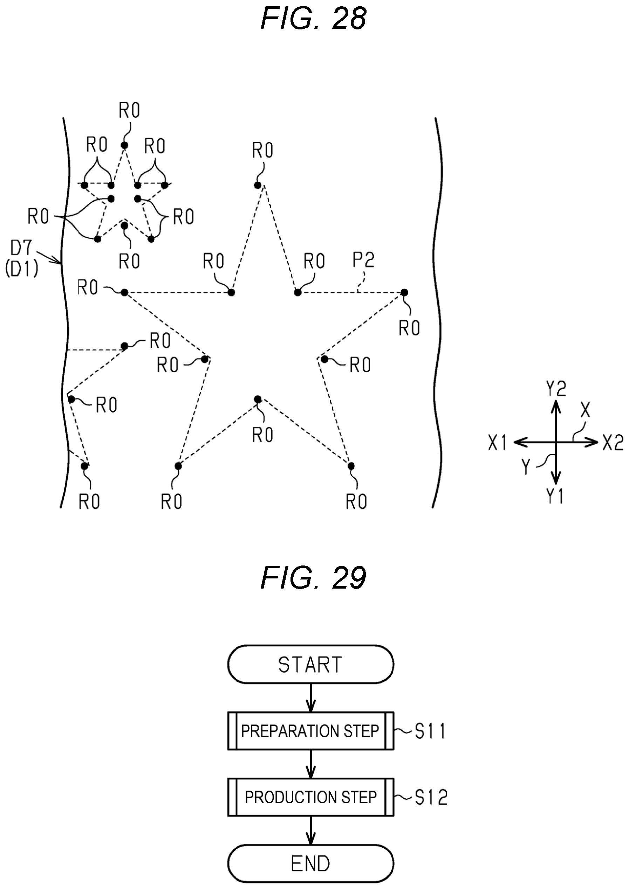

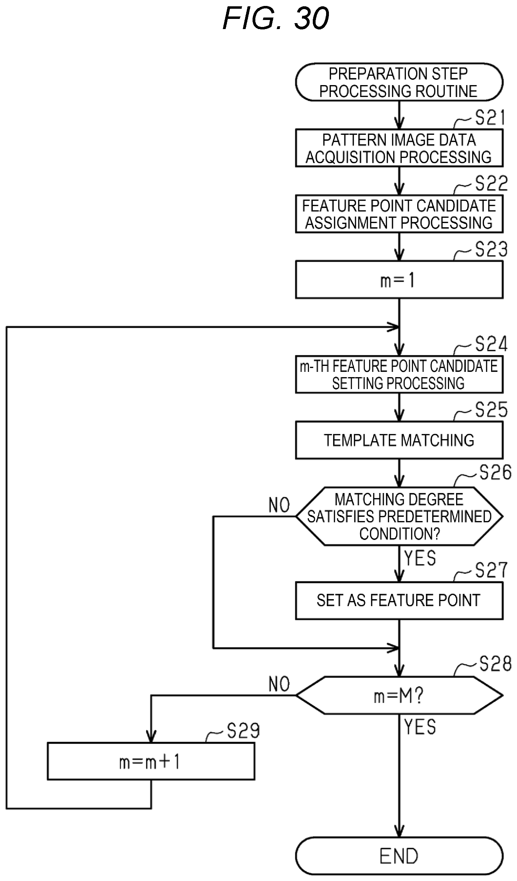

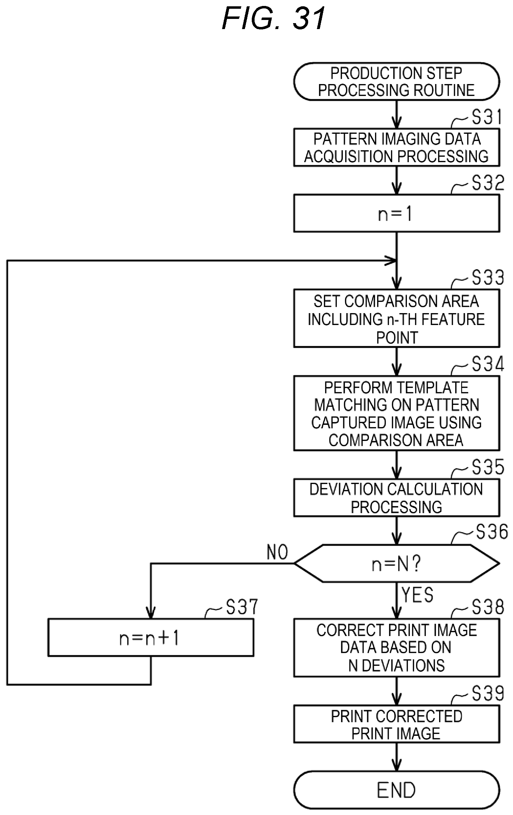

The storage unit 32 stores a program PR. The program PR includes programs illustrated as flowcharts in FIGS. 29 to 31. The program PR may include a program configuring firmware for controlling the printing unit 12, the conveyance unit 13, and the like. The program PR includes a program for causing the computer 31 to execute processing relating to a preparation step and a production step illustrated in FIG. 29. Specifically, the program PR illustrated in FIG. 29 includes a preparation step processing routine illustrated in FIG. 30 relating to the preparation step and a production step processing routine illustrated in FIG. 31 relating to the production step.

The storage unit 32 stores pattern image data D1. The pattern image data D1 is image data indicating the pattern P2 in a state in which the pattern P1 illustrated in FIG. 4 is not distorted. The pattern image data D1 is image data indicating the shape of the pattern P2 illustrated in FIG. 5. The pattern image data D1 may be an original image of the pattern P1 provided on the first surface 99A of the medium 99. The pattern image data D1 may be CAD data indicating the pattern P2 created by software. Hereinafter, the pattern image data D1 is also simply referred to as "pattern image D1" when focusing on an image of the pattern image data D1.

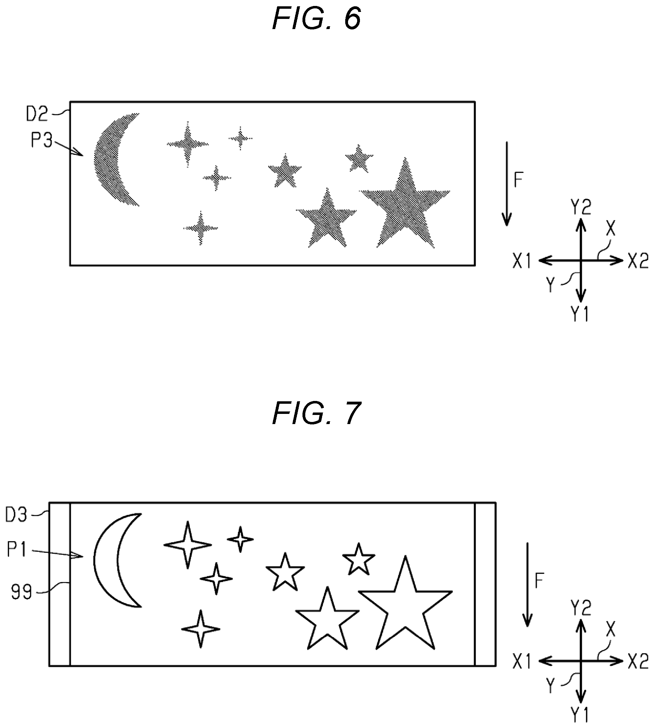

The storage unit 32 stores print image data D2. The print image data D2 is image data for printing a pattern P3 illustrated in FIG. 6 on the medium 99. In the present embodiment in which the printing unit 12 can perform color printing, the print image data D2 is also colored image data. The pattern P3 assumes a shape, a color, and the like corresponding to the pattern P1 of the medium 99, which is a printing target. The pattern P3 assumes a shape and the like corresponding to the pattern P1 appearing on the first surface 99A, which is the printing surface of the medium 99. The pattern P1 appearing on the printing surface of the medium 99 is different depending on whether the printing surface is the first surface or the second surface. The pattern P3 assumes a shape and the like corresponding to the pattern P1 appearing on the first surface 99A (the printing surface) of the medium 99.

The pattern P3 of the print image data D2 does not need to have the same shape as the pattern P1 and only has to have a shape and the like corresponding to the pattern P1. For example, when the pattern P1 is a contour line, the pattern P3 may be a pattern in which a predetermined color is applied to an area surrounded by the contour line or may be a line pattern or a band pattern of a predetermined color along the contour line of the pattern P1. Furthermore, the pattern P3 may be a pattern drawn at a position satisfying a predetermined positional relationship with the pattern P1. For example, the pattern P3 may be a pattern printed at a position shifted from the pattern P1 by a predetermined distance in a predetermined direction. As explained above, the pattern P3 is a pattern that produces one design together with the pattern P1 by being printed at a position corresponding to the pattern P1. The pattern P3 is printed at an appropriate position corresponding to the pattern P1 to give appropriate design to the medium 99. Hereinafter, in order to distinguish the patterns P1 and P3, the pattern P1 of the medium 99 is also referred to as first pattern P1 and the pattern P3 printed on the medium 99 is also referred to as second pattern P3.

In examples illustrated in FIGS. 5 and 6, the first pattern P1 and the second pattern P3 have the same shape and the same size. The first pattern P1 may be a three-dimensional weave pattern such as unevenness applied to the medium 99 and the second pattern P3 may be a color pattern that applies a color to the pattern P1, which is the weave pattern. The first pattern P1 may be, for example, a weave pattern in which an inner area of a contour line is woven into a recess or a protrusion. As illustrated in FIG. 6, the second pattern P3 is, for example, a color pattern applied in a predetermined color to an inner area of the contour line of the first pattern P1. The second pattern P3 may be a color pattern applied in a predetermined color to a background area that is the outer side of the contour line of the first pattern P1 or may be a color pattern that applies different colors or the same color respectively to parts or the entire both of the inner area of the first pattern P1 and the background. The second pattern P3 may be a color pattern that individually applies specific colors to individual pattern elements (star figures and the like in FIG. 6) configuring the second pattern P3. The color pattern may be a single color pattern or may be a multicolor pattern assuming two or more colors, such as gradation. The print image data D2 may be CAD data created by software and indicating the second pattern P3. Hereinafter, the print image data D2 is also simply referred to as "print image D2" when focusing on an image of the print image data D2.

The storage unit 32 stores pattern imaging data D3. The pattern imaging data D3 is image data obtained by imaging the pattern P1 of the medium 99. The pattern imaging data D3 is image data obtained by imaging the pattern P1 of the medium 99 with the imaging unit 14. The pattern imaging data D3 is an image obtained by imaging the pattern P1 at the time of printing. The pattern imaging data D3 is an image captured in a process in which the medium 99 is conveyed by the conveyance unit 13. The pattern imaging data D3 is image data obtained by imaging a portion located further upstream in the conveyance direction F than the printing unit 12 in the medium 99. The pattern imaging data D3 can also be considered an image representing a state of the medium 99 at the time of printing. For that reason, in the pattern imaging data D3, distortion sometimes occurs in the medium 99 because of tension applied to the medium 99 at the time of conveyance, a posture of the medium 99 at the time of printing, and the like. For this reason, the pattern P1 is sometimes distorted according to the distortion of the medium 99. In this case, the pattern P1 in the pattern imaging data D3 is imaged in a state of being distorted according to the distortion of the medium 99. Hereinafter, the pattern imaging data D3 is also referred to as "pattern captured image D3" when focusing on an image of the pattern imaging data D3.

### Preparation step and production step

Next, the preparation step and the production step are explained. The preparation step and the production step are performed by, for example, the computer 31 executing the program PR illustrated in FIGS. 29 to 31. The preparation step is a step of setting, in advance, feature points to be used in the production step. The production step is a step of producing a print by printing the second pattern P3 on the medium 99 having the first pattern P1. The print is, for example, a fabric in which the second pattern P3 corresponding to the first pattern P1 is printed (textile-printed) with the ink on a woven fabric in which the first pattern P1 is woven.

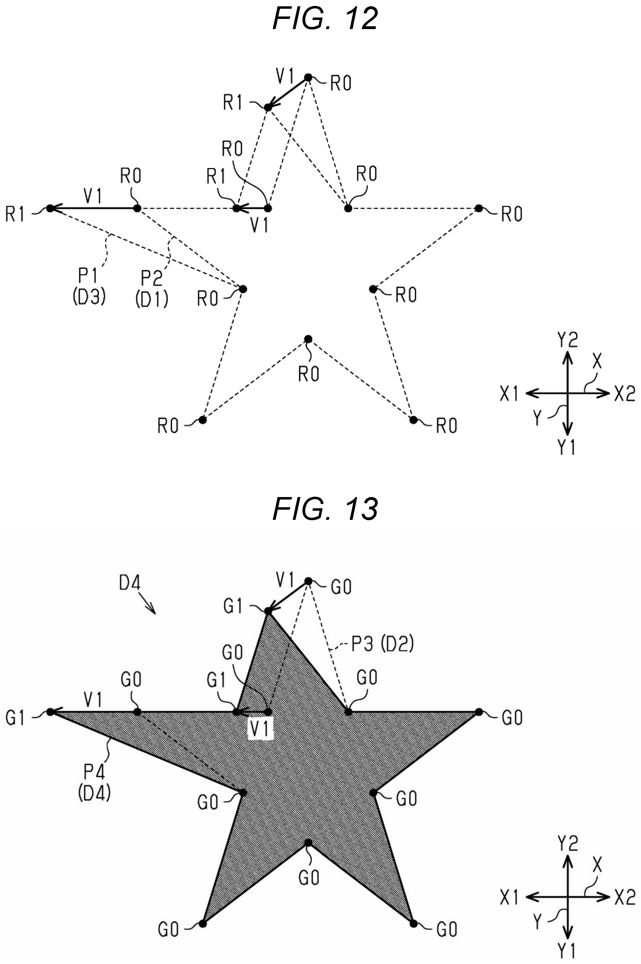

In the production step, print processing of printing the second pattern P3 at a position corresponding to the first pattern P1 is performed on the medium 99 having the first pattern P1. Depending on a posture caused by tension applied to the medium 99 being conveyed, skew of the medium 99, or the like, distortion such as slack or wrinkles or pulling or twisting sometimes occurs in the medium 99. In this case, the first pattern P1 is deformed by the distortion of the medium 99. When the second pattern P3 is printed on the deformed first pattern P1 as it is, since the positions and the shapes of the first pattern P1 and the second pattern P3 are different, a print in which the first pattern P1 and the second pattern P3 deviate from an assumed positional relationship is obtained. As a countermeasure for this, the production step includes image processing (deformation processing) of deforming the second pattern P3 according to the deformation of the first pattern P1 of the medium 99. This image processing is processing of calculating deviations V1 (see FIG. 12) between the positions of feature points R0 before displacement and the positions of displacement points R1 after the displacement using the feature points R0 of a pattern and deforming the second pattern P3 into a second pattern P4 (see FIG. 13) adjusted to the deformation of the first pattern P1 based on the obtained deviations V1. In the production step, the corrected second pattern P4 is printed on the medium 99 having the first pattern P1.

In the preparation step, the feature points R0 used in matching processing performed in order to obtain the deviations V1 used in deformation processing for the second pattern P3 are set. In the preparation step, feature point candidates RC that can be the feature points R0 are assigned on the pattern image D1 and the feature point candidates RC satisfying a predetermined condition are set as the feature points R0 out of a plurality of feature point candidates RC. In the present embodiment, the computer 31 is caused to execute the preparation step. That is, the computer 31 is caused to execute preparation step processing of assigning the feature point candidates RC, which are candidates of the feature points R0, to the pattern image D1 and setting, as the feature points R0, the feature point candidates RC satisfying the predetermined condition out of the plurality of feature point candidates RC.

### Configuration of the control unit 30

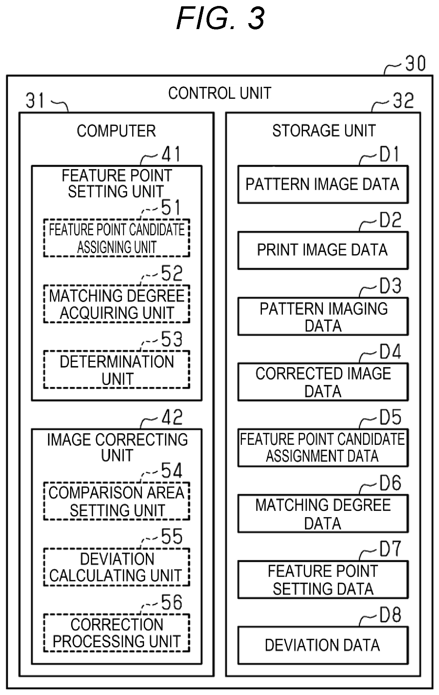

Next, a functional configuration of the control unit 30 is explained with reference to FIG. 3. The control unit 30 includes, for example, a feature point setting unit 41 and an image correcting unit 42 as functional units implemented as software by the computer 31 that executes the program PR. In order to implement these functional units, the program PR includes a feature point setting program and an image correction program. The feature point setting program may include a feature point candidate assignment program, a matching degree acquisition program, and a determination program. The image correction program may include a comparison area setting program, a deviation calculation program, and a correction processing program. These programs are executed by the computer 31 to implement functional units explained below.

That is, the feature point setting unit 41 includes a feature point candidate assigning unit 51, a matching degree acquiring unit 52, and a determination unit 53 as functional units that perform feature point setting processing. The image correcting unit 42 includes a comparison area setting unit 54, a deviation calculating unit 55, and a correction processing unit 56 as functional units that perform image correction processing.

The storage unit 32 stores various data besides the data D1 to D3 explained above. The various data include data used by the feature point setting unit 41 in order to set feature points, data used by the image correcting unit 42 in order to correct the print image data D2, and corrected print image data D4 obtained by correcting the print image data D2. The data used by the feature point setting unit 41 in order to set the feature points R0 includes feature point candidate assignment data D5 and matching degree data D6. The data used by the image correcting unit 42 in order to correct the print image data D2 includes feature point setting data D7 and deviation data D8. The feature point setting data D7 is setting data in which the feature point setting unit 41 sets the feature points R0. The feature point setting data D7 includes a set plurality of feature points R0.

First, a configuration of the medium 99, the pattern image data D1, the print image data D2, the pattern imaging data D3, and printing of a pattern on the medium 99 are explained.

### Configuration of the medium 99

As illustrated in FIG. 4, the medium 99 may be, for example, a jacquard fabric. The jacquard fabric is a fabric obtained by weaving a fiber such as a thread to form the pattern P1. The pattern P1 may be formed by unevenness caused by weaving.

The pattern P1 is provided on the first surface 99A of the medium 99. The pattern P1 is formed of a figure, a pattern, or the like that is applied to the medium 99 in advance in order to impart a design property to the medium 99. The pattern P1 may be periodically provided on the medium 99. The pattern P1 may be periodically provided on the medium 99 to repeatedly appear in the conveyance direction F. In FIG. 4, boundaries of the pattern P1 periodically provided in the conveyance direction F of the medium 99 are indicated by alternate long and two short dashes lines. The pattern P1 may have periodicity in which the same pattern portion repeatedly appears in the width direction X.

### Pattern image data D1

As illustrated in FIG. 5, the pattern image data D1 is image data including a reference pattern P2 indicating the pattern P1 without distortion. That is, the pattern image data D1 is data indicating the pattern P2 that is the basis of the pattern P1. It can also be said that the pattern image data D1 is an image indicating an ideal pattern P2 of the pattern P1. The pattern P2 indicates an ideal shape of the pattern P1. The pattern image data D1 may be generated by the printing apparatus 11. The pattern image data D1 may be input to the printing apparatus 11 from an external apparatus different from the printing apparatus 11.

The pattern image data D1 may be generated from CAD data indicating the pattern P1 created by software. In an example, the pattern image data D1 is obtained from the CAD data of the pattern P1 and a pre-scan image obtained by imaging the medium 99 in advance. For example, the pattern image data D1 is obtained by correcting the brightness of an image indicated by the CAD data based on brightness indicated by the pre-scan image. The CAD data is used in order to obtain the medium 99 having the pattern P1. Based on the CAD data, the medium 99 having the pattern P1 may be produced by a loom or the medium 99 having the pattern P1 may be produced by the printing apparatus 11. The pre-scan image may be acquired by the imaging unit 14 imaging the medium 99 having the pattern P1 in advance. The pre-scan image may be acquired by an imaging device different from the imaging unit 14 imaging the medium 99 having the pattern P1 in advance. Since the pattern P2 is the pattern that is the basis of the pattern P1, the design and the shape of the pattern P2 are basically the same.

### Print image data D2

As illustrated in FIG. 6, the print image data D2 indicates the shape, the color, and the like of an image printed on the medium 99 having the first pattern P1. The print image data D2 is image data including the second pattern P3 corresponding to the first pattern P1 of the medium 99.

### Pattern imaging data D3

As illustrated in FIG. 7, the pattern imaging data D3 is an image obtained by imaging the medium 99. The pattern imaging data D3 is an image in which the pattern P1 of the medium 99 is reflected. The pattern imaging data D3 is an image obtained by imaging the medium 99 over the entire width. The pattern imaging data D3 is an image obtained by imaging the medium 99 to include the pattern P1 for at least one period in the conveyance direction F. The pattern imaging data D3 may be generated by the printing apparatus 11. In one example, the pattern imaging data D3 is generated by the imaging unit 14 imaging the medium 99. The pattern imaging data D3 may be input from an external apparatus to the printing apparatus 11. The pattern imaging data D3 may be an image obtained by imaging the medium 99 with an imaging device different from the imaging unit 14.

The pattern imaging data D3 is an image different from the pre-scan image. The pattern imaging data D3 is an image captured at the time of printing. In one example, the pattern imaging data D3 is an image captured in a process in which the medium 99 is conveyed by the conveyance unit 13. It can also be said that the pattern imaging data D3 is an image representing a state of the medium 99 at the time of printing. For that reason, in the pattern imaging data D3, distortion sometimes occurs in the medium 99 because of tension applied to the medium 99 at the time of conveyance, a posture of the medium 99 at the time of printing, and the like. The pattern imaging data D3 includes a plurality of pixels. In order to distinguish the pattern P1 of the pattern imaging data D3 from the pattern P1 on the medium 99 side, the pattern P1 of the pattern imaging data D3 is sometimes referred to as imaged pattern P1.

### Medium 99 on which the print image D2 is printed

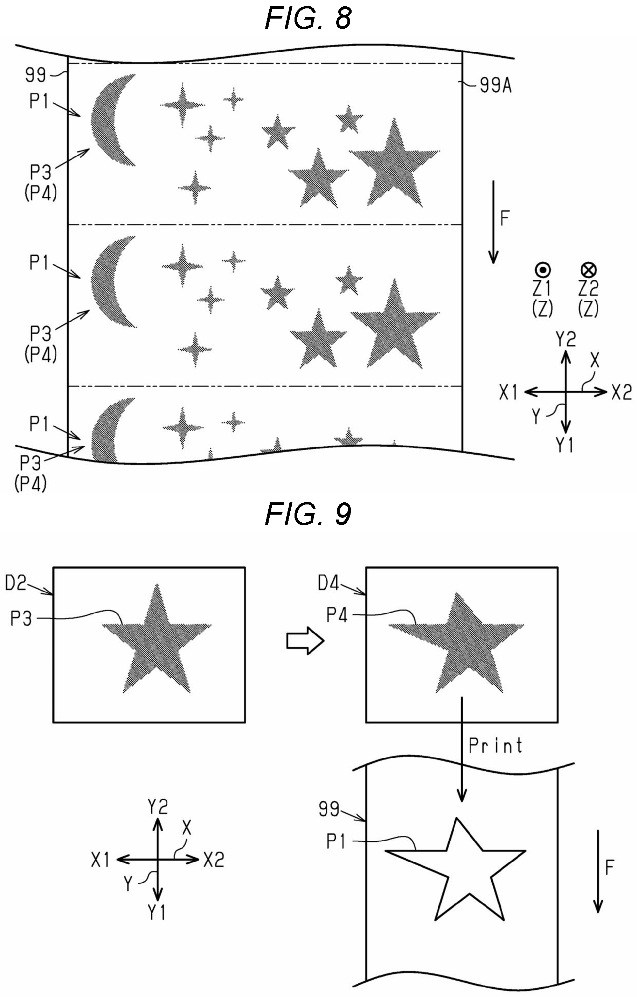

As illustrated in FIG. 8, a print image based on the print image data D2 is printed on the medium 99 with the ink ejected from the printing unit 12. The pattern P3 of the print image is printed at a position adjusted to the position of the pattern P1 of the medium 99. The pattern P3 is printed, for example, to be superimposed on the pattern P1 of the medium 99. In FIG. 8, boundaries of the pattern P3 periodically provided in the conveyance direction F of the medium 99 are indicated by alternate long and two short dashes lines. The alternate long and two short dashes lines are equivalent to the periodically provided boundaries of the pattern P1 illustrated in FIG. 4. The periodically provided patterns P1 and P3 and the printing area that the printing unit 12 periodically prints on the medium 99 every time the medium 99 is intermittently conveyed in the conveyance direction F may have the same period or may have different periods. In the case of the different periods, for example, one pattern P3 may be printed by printing the printing area twice or three times. On the contrary, for example, two or three patterns P3 may be printed by printing the printing area once.

### Correction of the print image D2

Next, image correction in the production step is explained with reference to FIG. 9. The medium 99 (see FIGS. 4 and 8) is sometimes distorted because of tension applied to the medium 99, the posture of the medium 99, and the like. In this case, the first pattern P1 is deformed according to the distortion that occurs in the medium 99. As illustrated in FIG. 9, in the present embodiment, the second pattern P4 is generated by correcting the shape of the second pattern P3 of the print image D2 according to the shape of the first pattern P1 deformed according to the distortion that occurs in the medium 99. Here, the pattern P1 deformed according to the distortion of the medium 99 is acquired from the pattern P1 in the pattern imaging data D3 obtained by the imaging unit 14 imaging the medium 99. The second pattern P4 subjected to the image correction is printed on the medium 99.

As illustrated in FIG. 9, since the pattern P3 of the print image data D2 is corrected to a shape adjusted to the deformed pattern P1 in the pattern imaging data D3, the print image data D2 is corrected to the corrected print image data D4 including the pattern P4 obtained by deforming the pattern P3. By printing based on the corrected print image data D4, the second pattern P4 corrected to the shape adjusted to the deformed first pattern P1 of the medium 99 is printed on the medium 99.

In the printing apparatus 11 in the present embodiment, the image correcting unit 42 calculates the deviations V1, which are the differences between the patterns P1 before and after the deformation, based on the pattern image data D1 and the pattern imaging data D3 and corrects the pattern P3 to the pattern P4 based on the deviations V1. The deviations V1 are calculated using the feature points R0 that are characteristic parts in the pattern P1. In the present embodiment, in the preparation step before printing a pattern, the feature point setting unit 41 sets the feature points R0 for the pattern P1 of the pattern image data D1 in advance.

### Detailed configuration of the feature point setting unit 41 and the image correcting unit 42

Hereinafter, configurations and processing contents of the feature point setting unit 41 and the image correcting unit 42 illustrated in FIG. 3 are explained in detail.

The feature point setting unit 41 performs at least a part of processing of the preparation step performed by the control unit 30. The feature point setting unit 41 sets feature points of a pattern used when deforming a pattern of the print image data D2 to match a pattern distorted according to, for example, distortion of the medium 99.

The feature point candidate assigning unit 51 assigns the feature point candidates RC, which are candidates for feature points, to the pattern image data D1. The feature point candidate assigning unit 51 assigns the feature point candidates RC to the pattern image data D1 to thereby generate the feature point candidate assignment data D5. The feature point candidate assigning unit 51 causes the storage unit 32 to store the generated feature point candidate assignment data D5.

The matching degree acquiring unit 52 acquires the matching degree data D6 relating to a matching degree by executing the matching processing in a surrounding area in the pattern image data D1 including the feature point candidate RC. The matching degree acquiring unit 52 causes the storage unit 32 to store the acquired matching degree data D6.

The determination unit 53 determines, based on the matching degree data D6, whether the feature point candidates RC are appropriate as feature points. When the matching degree data D6 satisfies a predetermined condition, the determination unit 53 sets the feature point candidates RC as the feature points R0. When the matching degree data D6 does not satisfy the predetermined condition, the determination unit 53 does not set the feature point candidates RC as the feature points R0. The determination unit 53 generates the feature point setting data D7 through processing of setting the feature points R0. The determination unit 53 causes the storage unit 32 to store the generated feature point setting data D7.

The image correcting unit 42 performs at least a part of the processing of the production step performed by the control unit 30. The image correcting unit 42 corrects the print image data D2 by deforming the pattern P3 of the print image data D2 according to the distortion of the pattern P1 corresponding to the distortion of the medium 99. The control unit 30 acquires the pattern imaging data D3 as image data used by the image correcting unit 42 when correcting the print image data D2. That is, the control unit 30 images, with the imaging unit 14, the pattern P1 of the medium 99 conveyed by the conveyance unit 13 and acquires the pattern imaging data D3.

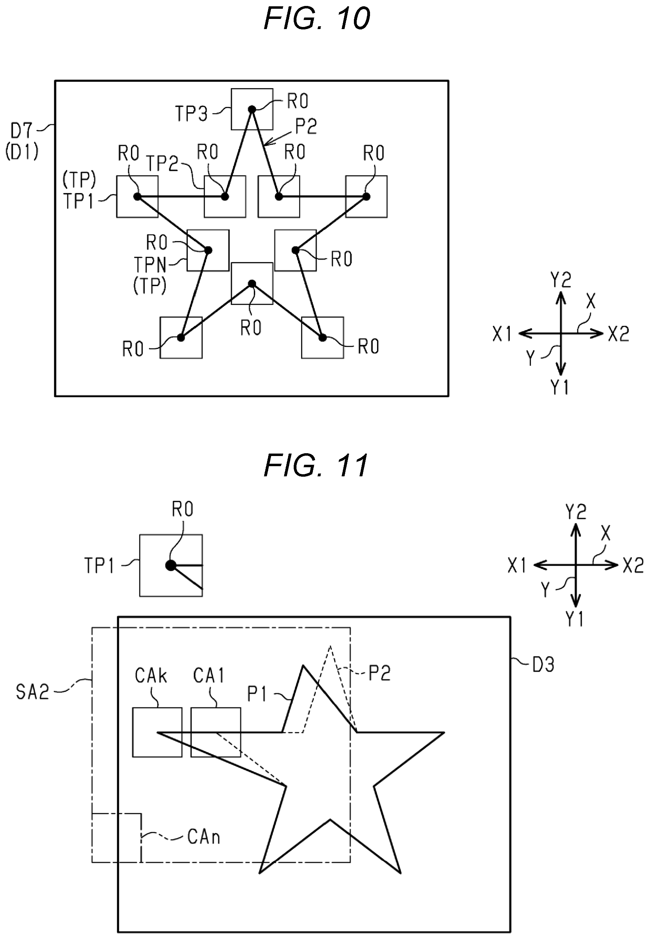

The comparison area setting unit 54 sets comparison areas TP (see FIG. 11) including the feature points R0 in the pattern imaging data D3. The comparison areas TP are templates including the feature points R0 when comparison processing is template matching.

The deviation calculating unit 55 calculates the deviations V1 (see FIG. 12) between the pattern image D1 and the pattern captured image D3 based on the feature points R0 included in the comparison areas TP. The deviation calculating unit 55 calculates, according to deviation of the pattern P1 caused by the distortion of the medium 99, the deviations V1 that occur with respect to the pattern P2 without distortion. The deviation calculating unit 55 calculates the deviations V1 between the pattern image D1 and the pattern captured image D3 based on the feature points R0 included in the comparison areas TP. That is, the deviation calculating unit 55 executes template matching processing in a surrounding area SA2 of the pattern imaging data D3 using, as the templates, the comparison areas TP including the feature points R0. As a result of the template matching processing, the deviation calculating unit 55 finds out areas having the highest matching degrees with the templates including the feature points R0 and acquires the positions (coordinates) of the found out areas.

The deviation calculating unit 55 calculates the deviations V1 between the positions (coordinates) of the feature points R0 in the pattern captured image D3 and the positions (coordinates) of the areas having the highest matching degrees with the feature points R0 in the surrounding area SA2. The deviations V1 are acquired for each of N feature points R0. The deviations V1 are indicated as, for example, vectors by the directions and the distances from the positions of the feature points R0 to the positions having the highest matching degrees. That is, the deviations V1 are indicated as vectors having direction components and displacement amount components for each of the N feature points R0. The deviation calculating unit 55 generates deviation data D8 including N deviations V1 calculated for each of the N feature points R0. The deviation calculating unit 55 causes the storage unit 32 to store the generated deviation data D8.

The correction processing unit 56 corrects the print image D2 based on the deviations V1 for each of the feature points R0. The correction processing unit 56 acquires a corrected print image D4 according to the correction of the print image D2. The correction processing unit 56 corrects the print image D2 to reduce the deviations V1 and acquires the corrected print image D4. The print image D2 may use the pattern image D1 as it is. That is, the same pattern P3 (P1) may be printed on the pattern P1 of the medium 99 using ink of a predetermined color. In this case, the correction processing unit 56 acquires the corrected print image D4 by correcting the pattern image D1 based on the deviations V1.

The control unit 30 prints the corrected print image D4 on the medium 99. Specifically, the control unit 30 controls the printing unit 12 and the conveyance unit 13 based on the corrected print image data D4 to thereby cause the printing unit 12 to print the corrected print image D4 on the medium 99. The corrected print image data D4 is used for control of the control unit 30 causing the printing unit 12 to print the corrected print image D4 on the medium 99.

### Correction processing for the print image data D2

Next, image correction processing of the control unit 30 correcting the print image data D2 to generate the corrected print image data D4 is explained with reference to FIGS. 10 to 13. In the present embodiment, the image correcting unit 42 of the computer 31 executes correction processing for the print image data D2. First, production step processing executed by the image correcting unit 42 is explained with reference to FIGS. 10 to 13. Processing content of preparation step processing executed by the feature point setting unit 41 of the computer 31 is explained below.

### Feature point setting data D7

First, the feature point setting data D7 is explained with reference to FIG. 10. FIG. 10 illustrates a portion including one pattern P2 in the feature point setting data D7. The feature point setting data D7 is image data in which the feature points R0 determined by the feature point setting unit 41 are set in the pattern image D1. In FIG. 10, the feature point setting data D7 includes the pattern image D1 but may be data of only the feature points R0 or may be image data including only the comparison areas TP used as the templates including the feature points R0. The matching processing only has to be able to be performed using the feature point setting data D7 and the pattern image data D1.

The feature points R0 are, for example, regions of interest (ROI) set in the pattern image D1. The feature point setting data D7 is data in which the feature points R0 including a plurality of regions of interest are set in the pattern image D1. The regions of interest R0 are regions including characteristic parts of the pattern P2 in the pattern image D1. The feature point setting data D7 is data including a plurality of feature points R0 and position coordinates of the feature points R0.

### Matching processing relating to image correction

Although only a part of the feature point setting data D7 is illustrated in FIG. 10, it is assumed that the N feature points R0 are set in total in the feature point setting data D7. The comparison area setting unit 54 sets the comparison areas TP including the feature points R0 for the feature point setting data D7. The comparison areas TP are set as template images. N comparison areas TP set as template images are present. N comparison areas TP1, TP2, ..., and TPN are set as template images.

The deviation calculating unit 55 performs template matching processing as matching processing for each of the comparison areas TP sequentially using the N comparison areas TP1, TP2, ..., and TPN as the template images. In FIG. 10, for example, an X2 direction is set as a positive direction and an X1 direction is set as a negative direction. A Y2 direction is set as a positive direction and a Y1 direction is set as a negative direction.

FIG. 11 illustrates the comparison areas TP illustrated in FIG. 10 and the surrounding area SA2. In FIG. 11, template matching processing performed using one comparison area TP1 among the N comparison areas TP as a template image is explained. The surrounding area SA2 is a movement range area set for each of the comparison areas TP. The surrounding area SA2 is a movement range area centering on the feature point R0 illustrated in FIG. 10 and is set for each of the feature points R0. The deviation calculating unit 55 sets areas obtained by shifting the comparison areas TP by one pixel each in the X direction and the Y direction as comparison target areas CA. As the comparison target areas CA, comparison target areas CA1, CA2, ..., and CAn are set in the surrounding area SA2 according to a movement amount and a movement direction of the comparison area TP1. In the template matching processing using the comparison areas TP as the templates, the deviation calculating unit 55 compares the comparison areas TP and the comparison target areas CA moving in the surrounding area SA2 and acquires a matching degree of features.

An amount of movement of the comparison area TP1 to the comparison target areas CA is indicated by mv = (a, b). The movement amount mv = (a, b) has coordinates of the feature point R0 illustrated in FIG. 10 as the origin (0,0). Here, a value a of (a, b) indicates a movement amount in the X direction and takes 0 or a positive or negative value. A value b indicates a movement amount in the Y direction and takes 0 or a positive or negative value. For example, an X2 direction in FIG. 11 is set as a positive direction and an X1 direction is set as a negative direction. A Y2 direction is set as a positive direction and a Y1 direction is set as a negative direction.

### Calculation processing for the deviations V1

Next, calculation processing for the deviations V1 is explained with reference to FIG. 12. The deviation calculating unit 55 calculates the deviations V1 between the pattern image D1 and the pattern captured image D3 based on the feature points R0 included in the comparison areas TP. In the present embodiment, the deviation calculating unit 55 calculates, using the comparison areas TP as template images, the deviations V1 based on the result of the template matching processing that is based on the feature points R0. Positions having the highest matching degrees are obtained as the positions of displacement points R1, which are displacement destinations of the feature points R0, by respective kinds of template matching processing using the N comparison areas TP1 to TPN. The deviation calculating unit 55 calculates the deviations V1 indicating, for example, displacement vectors of the feature points R0 using position coordinates of each of the positions of the feature points R0 and the positions of the displacement points R1. The deviations V1 indicated by the displacement vectors are indicated by displacing directions and lengths (distances) that are displacement amounts. In this way, the deviation calculating unit 55 calculates N deviations V1 for each of the N feature points R0. In the example illustrated in FIG. 12, the deviations V1 in which the displacement amounts are larger than 0 (zero) are obtained for three feature points R0 and the displacement amounts are substantially 0 and the deviations V1 are substantially 0 for the other feature points R0.

### Correction processing for the print image data D2 using the deviations V1

Next, correction processing for the print image data D2 using the deviations V1 is explained with reference to FIG. 13. The correction processing unit 56 corrects the print image data D2 based on the calculated deviations V1 to acquire the corrected print image data D4. That is, the correction processing unit 56 corrects the pattern P3 of the print image D2 using the deviations V1 to thereby generate the corrected print image D4 including the corrected pattern P4.

In the print image D2 indicated by a broken line in FIG. 13, positions equivalent to the feature points R0 are represented as G0. The correction processing unit 56 performs, on the print image D2, deformation processing of displacing the N positions G0 to respective displacement destination positions G1 using the deviations V1 corresponding to the respective positions G0. The correction processing unit 56 performs linear interpolation processing for the positions of the coordinates among the positions G0 in the print image D2. As a result of the correction processing by the deformation processing including the linear interpolation processing, the correction processing unit 56 acquires the corrected print image data D4 having the corrected pattern P4 illustrated in FIG. 13. The printing unit 12 prints the corrected print image D4 on the medium 99 conveyed by the conveyance unit 13.

### Processing relating to the preparation step

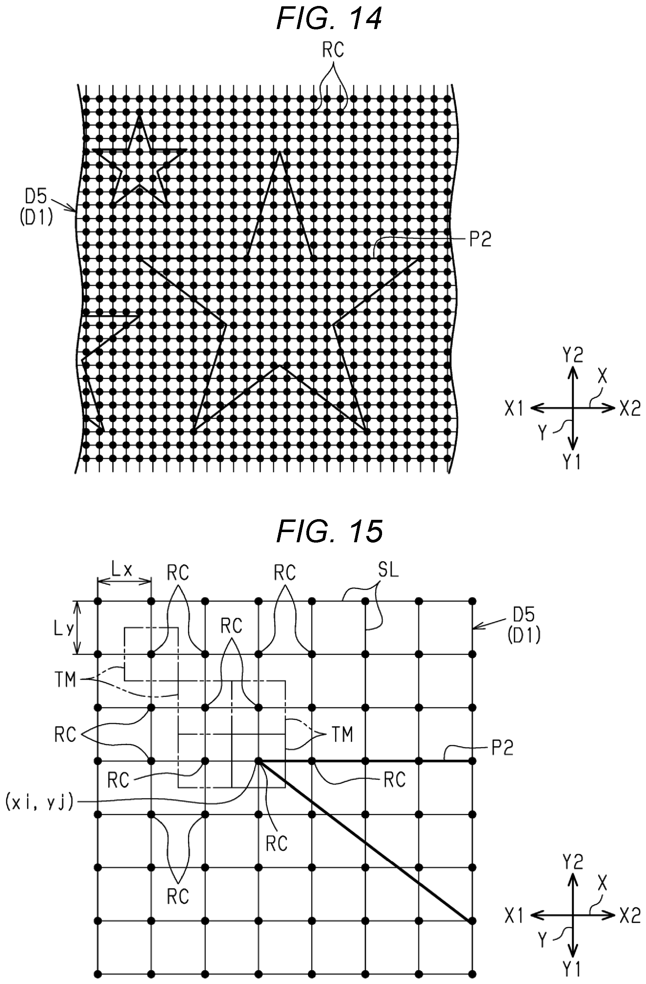

Next, processing relating to the preparation step is explained with reference to FIGS. 14 and 15. The preparation step is processing in which the feature point setting unit 41 sets the feature points R0 used for the correction processing for the print image data D2. A necessary condition for the feature points R0 is that other portions having the same or similar features are absent in surrounding areas of the feature points R0. For example, when inappropriate feature points R0 are set, displacement destinations of the feature points R0 cannot be correctly found and the print image data D2 is corrected based on the deviations V1 that are based on the incorrect displacement destinations. In this case, the pattern P3 is printed at a position deviating from a position assumed with respect to the pattern P1.

### Preparation of the feature point setting processing

FIG. 14 illustrates the feature point candidate assignment data D5 generated as preparation for the feature point setting processing. The feature point candidate assigning unit 51 creates the feature point candidate assignment data D5. The feature point candidate assigning unit 51 acquires the pattern image D1. The feature point candidate assigning unit 51 assigns the plurality of feature point candidates RC to the pattern image D1.

As illustrated in FIGS. 14 and 15, the feature point candidate assignment data D5 is data in which a point cloud is assigned in a matrix at positions equivalent to intersections of lattice-shaped division lines SL extending vertically and horizontally in the entire region of the pattern image D1 having the pattern P2. The lattice-shaped division lines SL are, for example, imaginary lines. Points configuring this point cloud are the feature point candidates RC. The feature point candidates RC are candidates for the feature points R0. The feature point candidates RC satisfying a predetermined condition among the feature point candidates RC are set as the feature points R0. The feature points R0 are, for example, regions of interest (ROI) representing features of the pattern P2. For this reason, the feature point candidates RC, which are the candidates for the feature points R0, are small areas having a predetermined size equivalent to the regions of interest. The feature point candidates RC have areas of the predetermined size and assigned coordinates of intersections.

FIG. 15 is an enlarged view of a main part of the feature point candidate assignment data D5 illustrated in FIG. 14. As a size of one cell divided by the lattice-shaped division lines SL, a dimension of one side in the X direction is Lx and a dimension of one side in the Y direction is Ly. The shape of the cell is, for example, a square. The dimensions Lx and Ly are respectively equal to the length of one side of the square. By determining the cell size, which is the size of one cell, a total number M of the feature point candidates RC assigned to the pattern image D1 is determined. That is, the total number M of the feature point candidates RC is determined by determining the dimension Lx (= Ly) that is an interval between the division lines SL.

Here, if the cell size is too large, the feature point candidates RC are too few. In this case, although a processing load of the feature point setting processing can be reduced, the number of feature points R0 set for the pattern P2 is small and the correction accuracy of the print image D2 is easily deteriorated. On the other hand, if the cell size is too small, the feature point candidates RC are too many. In this case, since many feature points R0 equal to or greater than a predetermined value can be set for the pattern P2, high correction accuracy of the print image D2 can be secured but the processing load of the feature point setting processing increases. For this reason, the cell size is set to a predetermined value with which the dimension Lx of one side of the cell is within a range of, for example, 10 to 30 mm. The cell size may be a value outside this range.

In the present embodiment, the number of the plurality of feature point candidates RC assigned to the pattern image D1 can be changed. That is, the feature point candidate assigning unit 51 is capable of changing the total number M of the feature point candidates RC assigned to the pattern image D1. For example, the feature point candidate assigning unit 51 is capable of changing the dimension Lx (= Ly) that determines the cell size for assigning the feature point candidates RC to the intersections. The feature point candidate assigning unit 51 displays, on the display unit 16, a setting screen to which the dimension Lx that determines the cell size can be input. The user is capable of inputting and designating a numerical value such as the dimension Lx that determines the cell size to the setting screen by operating the operation unit 15. The feature point candidate assigning unit 51 assigns the feature point candidates RC to intersections of the cell size corresponding to the received numerical value such as the dimension Lx. The user is capable of adjusting the total number M of the feature point candidates RC by inputting an appropriate dimension Lx according to the shapes and the complexity of the patterns P1 and P2.

Here, one area indicated by an alternate long and two short dashes line in FIG. 15 including the feature point candidate RC in the pattern image data D1 is represented as a first area TM. The first area TM is, for example, a rectangular area. The first area TM includes, for example, one feature point candidate RC at the center position. The first area TM is set as a template image of the matching processing performed in the preparation step.

### Matching processing relating to the feature point setting processing

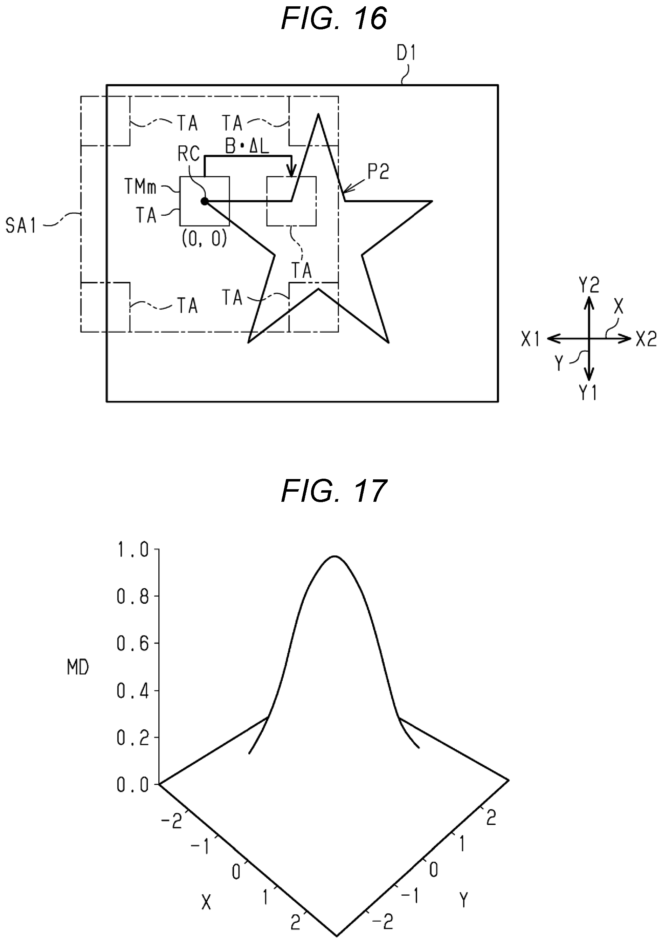

Next, the matching processing in the preparation step is explained with reference to FIG. 16. The matching degree acquiring unit 52 executes the matching processing. The matching processing is, for example, image matching. The image matching is, for example, template matching processing.

The matching degree acquiring unit 52 acquires the pattern image D1. The matching degree acquiring unit 52 performs the template matching processing using the first area TM as a template image and using the pattern image D1 as an input image. The first area TM is an area including one feature point candidate RC among the plurality of feature point candidates RC. The matching degree acquiring unit 52 calculates matching degrees at a plurality of positions for each of the plurality of feature point candidates RC by performing the matching processing for each of the feature point candidates RC in the pattern image D1.

FIG. 16 illustrates an example in which the matching processing is performed using an m-th first area TMm among M areas as a template image. An area obtained by shifting the first area TMm by, for example, one pixel at a time as an amount of moving the first area TMm in the X direction and the Y direction is set as a second area TA. A surrounding area SA1 is a movement range area of the second area TA that is a matching target in the pattern image D1. The matching degree acquiring unit 52 moves the second area TA within a range of the surrounding area SA1. The surrounding area SA1 includes the first area TM at the center position and is set as a rectangular area having a size of, for example, twice or a larger natural number multiple of the first area TM. The surrounding area SA1 is set such that the position of a displacement destination thereof is within the range of the surrounding area SA1 even when the pattern P1 of the medium 99 is distorted with assumed maximum deviation considering stretchability or the like of the medium 99 because of a cause such as pulling or a change in the posture of the medium 99. The length of one side of the surrounding area SA1 is, for example, a predetermined value within a range of 10 to 30 mm. The length of one side may be a value outside this range.

As illustrated in FIG. 16, position coordinates of the first area TMm are set as the origin (0,0). The origin (0,0) is set for each of the first areas TMm. An amount of movement of the second area TA from the origin (0,0) of the first area TMm is indicated by mv = (p, q). Here, a value p of (p, q) indicates a movement amount in the X direction and takes 0 or a positive or negative value. The value q of (p, q) indicates a movement amount in the Y direction and takes 0 or a positive or negative value. For example, an X2 direction in FIG. 16 is set as a positive direction and an X1 direction in FIG. 16 is set as a negative direction. A Y2 direction is set as a positive direction and a Y1 direction is set as a negative direction.

The matching degree acquiring unit 52 calculates matching degrees of the feature point candidates RC by comparing the first area TM and the second area TA, which is an area, the position of which is moved from the first area TM, in the pattern image D1. The matching degree acquiring unit 52 repeats the comparison of the first area TM and a plurality of second areas TA while changing at least one of a direction and an amount of moving the second area TA and calculates matching degrees at a plurality of positions with respect to the feature point candidates RC. The direction in which the matching degree acquiring unit 52 moves the second area TA is, for example, at least one of the X direction and the Y direction. The amount by which the matching degree acquiring unit 52 moves the second area TA from the origin (0,0) is B · ΔL. Here, B is a natural number. ΔL is a minimum unit amount. ΔL is, for example, one pixel but may be two pixels, three pixels, or four or more pixels. The matching degree acquiring unit 52 changes the second area TA to a different position in the surrounding area SA1 by changing at least one of the direction and the amount B · ΔL of moving the second area TA.

The matching degree acquiring unit 52 may be capable of changing the amount ΔL of changing the second area TA when the matching degree is calculated. For example, the matching degree acquiring unit 52 causes the display unit 16 to display a setting screen to which the minimum unit amount ΔL of changing the second area TA can be input. The user inputs the amount ΔL of changing the second area TA to the setting screen by operating the operation unit 15. The matching degree acquiring unit 52 sets the received value as the amount ΔL of changing the second area TA. For example, a default is that an amount of change at the time when setting, as the second area TA, an area obtained by changing the first area TM in one of the X direction and the Y direction is one pixel at a time. When the user changes the amount ΔL of changing the second area TA on the setting screen, the matching degree acquiring unit 52 changes the second area TA based on the received amount ΔL.

FIG. 17 illustrates a matching degree MD to the movement amount mv. Two horizontal axes X and Y indicate an X-direction component and a Y-direction component of the movement amount mv = (p, q). That is, the X axis indicates the movement amount p in the X direction and the Y axis indicates the movement amount q in the Y direction. The vertical axis indicates the matching degree MD. The matching degree MD is indicated by a value in a range of 0 to 1 (100%). In other words, the matching degree MD is indicated as a value within a range of 0 to 100%. The matching degree MD = 1 indicates a complete match of 100% matching. The matching degree MD = 0 indicates an incomplete match in which a matching element is 0%. For example, in the case of the movement amount mv = (0,0), because of the complete match, the matching degree MD usually tends to take a value of 0.9 or more (for example, "1"). For this reason, in an example illustrated in FIG. 17, a distribution of the matching degrees MD having a peak at the position of the movement amount mv = (0,0) is obtained.

In an example of a distribution of the matching degrees MD illustrated in FIG. 17, one peak with a suppressed spread is present in the surrounding area SA1, which is a target range of template matching. Other peaks and the like having high matching degrees MD are absent other than the one peak. In this case, when this feature point candidate RC is set as the feature point R0, a part having a feature value such as another similar shape having a high matching degree MD with the feature point R0 is absent in the surrounding area SA1. For this reason, it is possible to suppress occurrence of erroneous calculation of the deviation V1 in which the deviation calculating unit 55 sets a part having a feature value such as another similar shape in the surrounding area SA2 as the position of a displacement destination of the feature point R0.

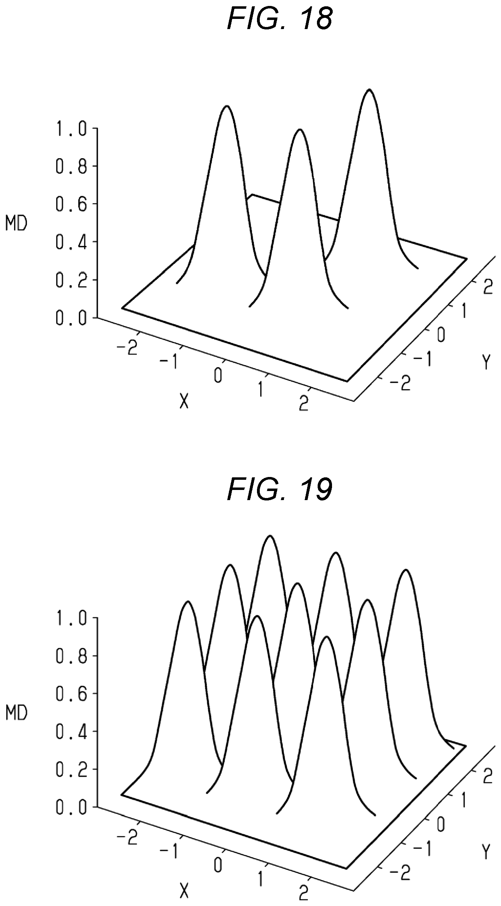

In contrast, when distributions of the matching degrees MD illustrated in FIGS. 18 to 21 are obtained, one or more other portions having high matching degrees MD with the feature point candidate RC are present around the feature point candidate RC. When such a feature point candidate RC is set as the feature point R0, as a result of the matching processing, a wrong position having a high matching degree is searched for as the position of a displacement destination of the feature point R0 and erroneous calculation of the deviation V1 due to this tends to occur.

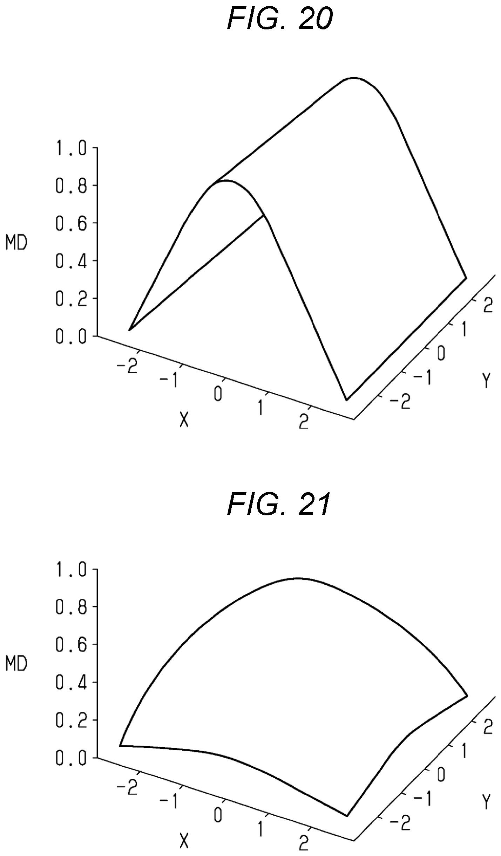

The distributions of the matching degrees MD illustrated in FIGS. 18 and 19 have a plurality of peaks having high matching degrees MD with the feature point candidate RC in the surrounding area SA1. In the distribution of the matching degrees MD illustrated in FIG. 20, a maximum value of the matching degrees MD is not determined in the Y direction in the surrounding area SA1. The distribution of the matching degrees MD illustrated in FIG. 21 has one peak in the surrounding area SA1. However, since the peak has a spread, the maximum value of the matching degrees MD tends to include an error exceeding an allowable range. In these cases, erroneous calculation of the deviation V1 caused by a search error in which another position having the same or similar feature value as the feature point R0 is searched for as the position of a displacement destination of the feature point R0 as a result of the matching processing tends to occur.

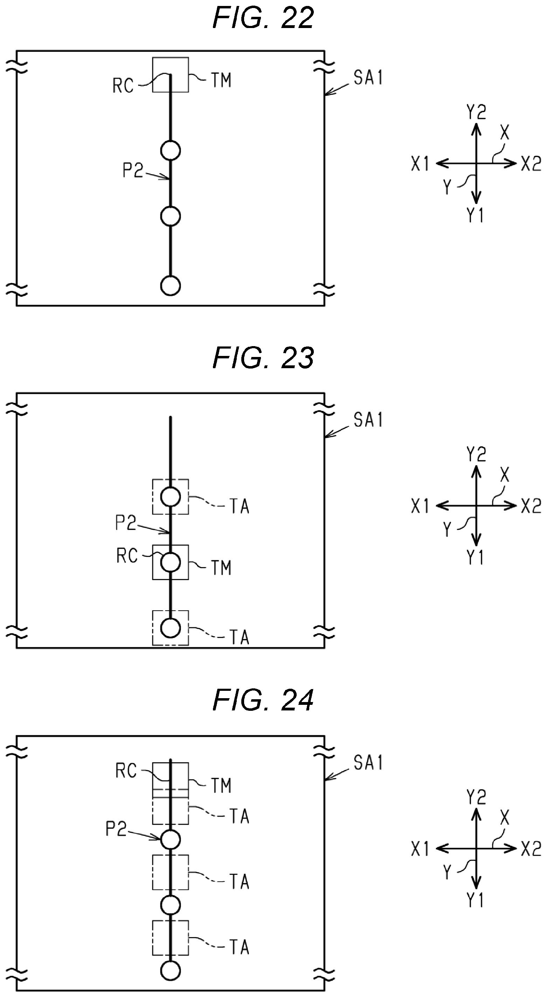

Next, a setting method for the feature point R0 is explained with reference to FIGS. 22 to 24. In FIGS. 22 to 24, for convenience of explanation, the pattern P2 is an example having a straight line and a plurality of circles present at intervals on the straight line. FIG. 22 is an example of the feature point candidate RC appropriate as the feature point R0. FIGS. 23 and 24 are examples of the feature point candidate RC inappropriate as the feature point R0.

In the example illustrated in FIG. 22, an end portion of the straight line is set as the feature point candidate RC. In this case, a shape that is the same as or similar to the feature point candidate RC including the end portion is absent in the surrounding area SA1. That is, one part having a feature of the feature point candidate RC is determined in the surrounding area SA1. For that reason, the distribution of the matching degrees MD has one peak with the suppressed spread as illustrated in FIG. 17.

In the example illustrated in FIG. 23, a circular portion is set as the feature point candidate RC. In this case, a plurality of (for example, three) shapes that are the same as or similar to the feature point candidate RC including a circle are present in the surrounding area SA1. In the surrounding area SA1, a plurality of parts having a feature of the feature point candidate RC are present in the surrounding area SA1 and one part is not determined. In this case, the distribution of the matching degrees MD has, for example, a plurality of peaks as illustrated in FIG. 18. When the pattern P2 illustrated in FIG. 23 is a plurality of patterns disposed side by side in the X direction, the distribution of the matching degrees MD has, for example, a plurality of peaks at matrix positions on an XY plane as illustrated in FIG. 19.

In the example illustrated in FIG. 24, a part of the straight line not including the end portion is set as the feature point candidate RC. When the first area TM including the feature point candidate RC is shifted by one pixel at a time in the Y direction in the surrounding area SA1, a maximum value of the matching degrees MD is continuous in the Y direction in a range of movement on the straight line of the pattern P2. For that reason, as illustrated in FIG. 20, the distribution of the matching degrees MD takes a distribution in which the maximum value of the matching degrees MD is continuous in the Y direction.

Furthermore, when the pattern P2 has a shape that gradually changes, when the first area TM including the feature point candidate RC is shifted by one pixel at a time in the Y direction in the surrounding area SA1, the matching degrees MD gradually decrease as the distance from the origin increases. In this case, as illustrated in FIG. 21, the distribution of the matching degrees MD converge to one peak but, since the peak has a spread, is a broad distribution in which portions exceeding a threshold SH of the matching degrees MD exceed an allowable range. When the feature point candidate RC for which the distribution of the matching degrees MD illustrated in FIGS. 18 to 21 is obtained is set as the feature point R0, erroneous calculation of the deviation V1 caused by erroneous determination of the position of the displacement destination of the feature point R0 tends to occur.

Thus, the feature point setting unit 41 sets, as the feature point R0, the feature point candidate RC that satisfies a predetermined condition of having only one peak with a suppressed spread as in the distribution of the matching degrees MD illustrated in FIG. 17. That is, the predetermined condition may be that high matching degrees MD exceeding the threshold SH are present in the surrounding area SA1 and a point cloud of the matching degrees MD exceeding the threshold SH gathers in an area equivalent to one peak. Then, when a distribution including a point cloud of the matching degrees MD at a plurality of positions obtained by the matching degree acquiring unit 52 as a result of the template matching processing satisfies the predetermined condition, the determination unit 53 (see FIG. 3) sets the feature point candidate RC at that time as the feature point R0.

### Determination method by the determination unit 53

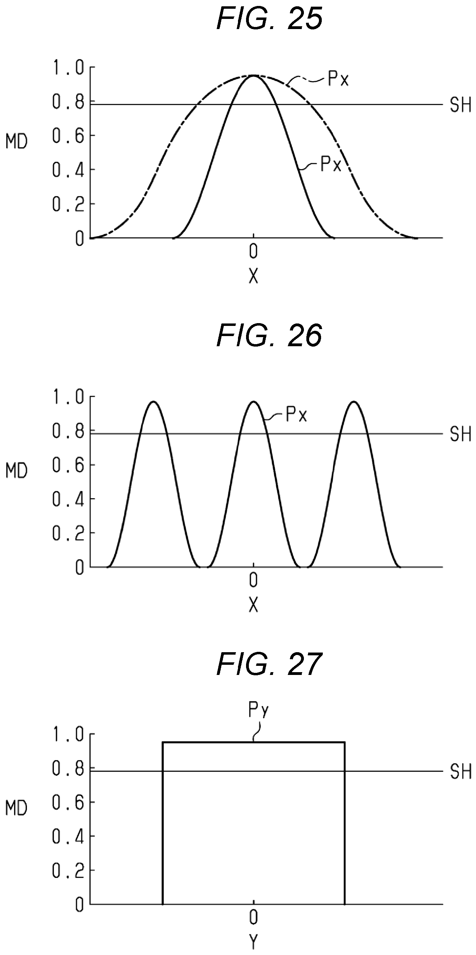

Next, an example of a determination method of the determination unit 53 determining whether the predetermined condition is satisfied is explained with reference to FIGS. 25 to 27. The determination method explained below is an example. Another publicly-known determination method capable of determining that a predetermined condition that only one peak having a gradient equal to or greater than a predetermined gradient is present in the surrounding area SA1 is satisfied may be adopted.

When a point cloud (a distribution) of the matching degrees MD obtained by the template matching processing in the surrounding area SA1 satisfies a predetermined condition, the determination unit 53 sets the feature point candidate RC as the feature point R0. Here, the predetermined condition is that, as illustrated in FIG. 17, there is one peak in a three-dimensional distribution in which the matching degrees MD are indicated by a point cloud. Specifically, the predetermined condition includes both conditions that (a) the matching degrees MD exceeding the threshold SH are present and (b) the matching degrees MD exceeding the threshold SH have only one peak. Furthermore, the predetermined condition may include (c) a condition that a point cloud of the matching degrees MD exceeding the threshold SH gathers in one range. FIGS. 25 to 27 illustrate an example in which the threshold SH is set to approximately 0.7. However, the threshold SH may be a value other than this value. As the threshold SH, a value obtained based on a preliminary experiment or theoretical calculation can be set as appropriate. The threshold SH may be, for example, a predetermined value within a range of 0.4 to 0.8 or may be a value greater than 0 and smaller than 1 outside this range.

In the example illustrated in FIGS. 25 to 27, the determination unit 53 performs determination based on a two-dimensional matching degree Px on an X-MD plane cut along a plane passing through the origin (0,0) on the XY plane and orthogonal to the Y axis and a two-dimensional matching degree Py on a Y-MD plane cut along a plane passing through the origin (0,0) on the XY plane and orthogonal to the X axis. This determination method is an example. Another publicly-known determination method capable of determining whether the predetermined condition is satisfied may be used.

Of the two kinds of matching degrees Px and Py, for convenience of explanation, only the matching degree Px on the X-MD plane is illustrated in FIGS. 25 and 26 and only the matching degree Py on the Y-MD plane is illustrated in FIG. 27. In an example of the matching degree Px indicated by a solid line in FIG. 25, since only one peak exceeding the threshold SH and having a suppressed spread is present, the predetermined condition is satisfied. For this reason, when the distribution of the matching degrees MD illustrated in FIG. 17 is obtained, the determination unit 53 determines that the predetermined condition is satisfied. As explained above, in the predetermined condition, a group of matching degrees MD exceeding the threshold SH among matching degrees MD at the plurality of positions gathers in one area.

In an example indicated by an alternate long and short dash line in FIG. 25, although the two kinds of matching degrees Px and Py both have only one peak, a point cloud of the matching degrees MD exceeding the threshold SH does not gather in an area in one allowable range. That is, the point cloud of the matching degrees MD in which at least one of the two kinds of matching degrees Px and Py exceeds the threshold SH deviates to the outside of the one allowable range. Thus, the determination unit 53 determines that the predetermined condition is not satisfied. For this reason, when the distribution of the matching degrees MD illustrated in FIG. 21 is obtained, the determination unit 53 determines that the predetermined condition is not satisfied.

In the example of the matching degree Px illustrated in FIG. 26, a point cloud exceeding the threshold SH is discretely present in a plurality of (for example, three) areas in the X direction. That is, a plurality of peaks are present. Thus, the determination unit 53 determines that the predetermined condition is not satisfied. That is, although the matching degree MD satisfying the condition that the threshold SH is exceeded is present, a group of matching degrees MD exceeding the threshold SH is dispersed in a plurality of areas. For example, this is equivalent to a case in which the distributions of the matching degrees MD illustrated in FIGS. 18 and 19 are obtained. When these distributions are obtained, the determination unit 53 determines that the predetermined condition is not satisfied.

In the example of the matching degree Py illustrated in FIG. 27, although point clouds exceeding the threshold SH are present, those point clouds are continuous over length exceeding a threshold length in the Y direction. That is, since the distribution of the matching degrees MD does not have one peak, the predetermined condition is not satisfied. For example, this is equivalent to a case in which the distribution of the matching degrees MD illustrated in FIG. 20 is obtained. When the distribution of the matching degrees MD is obtained, the determination unit 53 determines that the predetermined condition is not satisfied. In the case of the distribution illustrated in FIG. 20, when the predetermined condition is not satisfied in at least one of the two kinds of matching degrees Px and Py, the determination unit 53 determines that the predetermined condition is not satisfied.

FIG. 28 illustrates the feature point setting data D7 in which the feature point setting unit 41 sets the feature points R0 based on a determination result of the determination unit 53. The feature point setting data D7 is data in which the feature points R0 determined as satisfying the predetermined condition by the feature point setting unit 41 among the plurality of feature point candidates RC belonging to the feature point candidate assignment data D5 are set in the pattern image D1. In FIG. 28, the pattern P2 is drawn with a broken line such that a positional relationship between the feature points R0 and the pattern P2 can be seen. The feature point setting data D7 illustrated in FIG. 28 is the same as the feature point setting data D7 illustrated in FIG. 10 and indicates a wider range than FIG. 10. The feature point setting data D7 is data in which the feature points R0 are set in all the patterns P2 in the pattern image data D1. The feature points R0 set in the feature point setting data D7 are used for the matching processing in the production step.

### Action of the embodiment

Next, action of the printing apparatus 11 configured as explained above is explained with reference to FIGS. 1 to 31. Flowcharts illustrated in FIGS. 29 to 31 illustrate a printing method of the present embodiment. In the present embodiment, the printing method is implemented by causing the computer 31 to execute the program PR illustrated in the flowcharts in FIGS. 29 to 31. The printing apparatus 11 includes the feature point setting unit 41 and the image correcting unit 42 configured as software by the computer 31 executing the program PR. Hereinafter, the printing method, content of the program PR, and an operation of the printing apparatus 11 are explained with reference to the flowcharts illustrated in FIGS. 29 to 31.

As illustrated in FIG. 29, the printing method includes a preparation step (step S11) and a production step (step S12). In the present embodiment, for example, the program PR to be executed by the computer 31 includes the preparation step and the production step.

In step S11, the control unit 30 performs the preparation step. In the preparation step, the control unit 30 performs processing of setting the feature points R0.

In step S12, the control unit 30 performs the production step. In the production step, the control unit 30 prints, on the medium 99, a print image including the pattern P4 obtained by deforming the pattern P3 using the feature points R0.

Hereinafter, the preparation step and the production step are explained in detail.

### Preparation step processing

First, preparation step processing, which is processing of the preparation step, is explained with reference to FIG. 30. The printing apparatus 11 that prints an image on the medium 99 having the pattern P1 uses the corrected print image D4 obtained by correcting the print image D2 when printing the image. A program relating to the preparation step processing illustrated in FIG. 30 causes the computer 31 to execute processing of setting the feature points R0 as setting information used to correct the print image D2. In the following explanation, the control unit 30 is assumed as an entity of the processing. However, specifically, the computer 31 of the control unit 30 executes processing in steps.

First, in step S21, the control unit 30 executes pattern image data acquisition processing. In this processing, the control unit 30 reads the pattern image data D1 from the storage unit 32. Accordingly, the control unit 30 acquires the pattern image data D1.

In step S22, the control unit 30 executes feature point candidate assignment processing. The control unit 30 performs processing of assigning feature point candidates to the pattern image data D1. For example, the control unit 30 sets M feature point candidates RC (see FIG. 14) for the pattern image data D1. Accordingly, the control unit 30 creates the feature point candidate assignment data D5 illustrated in FIG. 14.

In step S23, the control unit 30 numbers feature points to be used in template matching explained below and sets m = 1 as an initial value of the numbering. That is, the control unit 30 sets m of an m-th feature point candidate to an initial value "1". When a total number of feature point candidates RC is represented as M, m is m= 1, 2, ..., and M.

In step S24, the control unit 30 executes m-th feature point candidate setting processing. That is, the control unit 30 sets a template image that is the first area TMm including the m-th feature point candidate RC. Specifically, the control unit 30 sets a template image to be used when template matching based on the m-th feature point candidate RC is performed on the second area TA of the pattern image data D1 using the first area TM including the m-th feature point candidate RC as a template.

In step S25, the control unit 30 executes template matching. The control unit 30 calculates the matching degree MD between the first area TM and the second area TA using the first area TM including the m-th feature point candidate as a template image and while sequentially moving the second area TA in the surrounding area SA1 of the pattern image data D1. In this way, the matching degree MD is calculated for each of the second areas TA sequentially moved as the matching target. For example, the matching degree MD is given to each of a plurality of positions (position coordinates of the second areas TA) on the XY plane. For example, a point cloud of a plurality of matching degrees MD forming the distribution illustrated in any one of FIGS. 17 to 21 is obtained.

In step S26, the control unit 30 determines whether the matching degrees MD satisfy a predetermined condition. That is, the control unit 30 determines whether the matching degrees MD at a plurality of positions indicated by the point cloud satisfy the predetermined condition. The control unit 30 may determine whether a distribution shape formed by the point cloud of the matching degrees MD satisfies the predetermined condition. When the matching degrees MD satisfy the predetermined condition, the control unit 30 proceeds to step S27. When the matching degrees MD do not satisfy the predetermined condition, the control unit 30 proceeds to step S28.

Here, an example of a determination method for determining whether the matching degrees MD satisfy the predetermined condition is explained. As illustrated in FIG. 17, the control unit 30 determines whether a distribution formed by the point cloud of the matching degrees MD satisfies a predetermined condition that the distribution has one peak with a suppressed spread. For example, the control unit 30 may determine whether the distribution of the matching degrees MD satisfies the predetermined condition using a value Px of the matching degree MD on an X-MD plane cut along a plane passing a maximum value and intersecting (for example, orthogonal to) the Y axis and a value Py of the matching degree MD on a Y-MD plane cut along a plane passing the maximum value and intersecting (for example, orthogonal to) the X axis. For example, as illustrated in FIGS. 25 to 27, the control unit 30 determines, based on the matching degrees Px and Py and the threshold SH, whether the predetermined condition is satisfied. In this case, the predetermined condition may be that each of the matching degrees Px and Py exceeds the threshold SH and both have peaks. Whether the distribution formed by the point cloud of the matching degrees MD has a peak with a suppressed spread may be determined according to whether an X range or a Y range exceeding the threshold SH is narrowed down to a predetermined range. As explained above, the predetermined condition may include, in addition to the condition for determining the presence or absence of one peak, a determination condition for, when there is one peak, determining that a spread of the peak is suppressed.

For example, the control unit 30 determines that, in the relationship with the threshold SH, the matching degrees Px and Py satisfy the predetermined condition for the distribution forming one peak with the suppressed spread indicated by the solid line in FIG. 25. On the other hand, for example, the control unit 30 determines that, in the relationship with the threshold SH, the matching degrees Px and Py do not satisfy the predetermined condition for a distribution in which one peak has a spread indicated by the alternate long and short dash line in FIG. 25 or a distribution not converging to one peak as illustrated in FIGS. 26 and 27.

In step S27, the control unit 30 sets the feature point candidate RC as the feature point R0. That is, the control unit 30 sets the feature point candidate RC, the matching degree MD of which satisfies the predetermined condition, as the feature point R0.

In step S28, the control unit 30 determines whether m has reached m = M. That is, the control unit 30 determines whether the calculation of the matching degree MD by the template matching and the determination of the matching degree MD have been ended for all the M feature point candidates RC. When m has not reached m = M, the control unit 30 proceeds to step S29. On the other hand, when m has reached m = M because the calculation of the matching degree MD and the determination of the matching degree MD have ended for all the feature point candidates RC, the control unit 30 ends the processing routine.

In step S29, the control unit 30 sets m = m+1. That is, the control unit 30 sets m = 2 by incrementing the value m and switches the target feature point candidate RC to the next one. After incrementing m, the control unit 30 returns to step S24.

In steps S24 to S27, the control unit 30 executes, for a second feature point candidate RC, the same processing as the processing for the first feature point candidate RC. That is, the control unit 30 calculates the matching degree MD between the first area TM and the second area TA using the first area TM including the second feature point candidate RC as a template image and while moving the second area TA in the surrounding area SA1 of the pattern image data D1.

Subsequently, similarly, by repeatedly executing the processing in steps S24 to S27 while incrementing m in the order of m = 3,4, ..., and M, the control unit 30 determines whether the matching degree MD satisfies the predetermined condition for each m-th feature point candidate RC. When the matching degree MD satisfies the predetermined condition, the control unit 30 sets the m-th feature point candidate RC as the feature point R0. On the other hand, when the matching degree MD does not satisfy the predetermined condition, the control unit 30 does not set the m-th feature point candidate RC as the feature point R0.

In this way, the feature point candidates RC satisfying the predetermined condition among the M feature point candidates RC are set as the feature points R0. Accordingly, the control unit 30 creates the feature point setting data D7 in which the feature points R0 are set for the pattern P2 of the pattern image data D1 illustrated in FIGS. 10 and 28. It is assumed that the N feature points R0 are set as a result of the preparation step. The control unit 30 saves the feature point setting data D7 in the storage unit 32.

In the present embodiment, the preparation step in the printing method is performed by the processing explained above executed by the control unit 30. The preparation step in the printing method includes the following (A) and (B).
(A) Acquiring the pattern image D1.
(B) Setting the feature point R0 in the acquired pattern image D1.

In (B) explained above, the setting of the feature point R0 includes the following (B1) to (B3).

(B1) Assigning the plurality of feature point candidates RC to the pattern image D1.

(B2) Performing, in the pattern image D1, matching processing for each of the plurality of feature point candidates RC to thereby calculate the matching degrees MD at a plurality of positions for each of the feature point candidates RC.

(B3) Setting, as the feature point R0, the feature point candidate RC, the matching degree MD of which satisfies the predetermined condition, among the plurality of feature point candidates RC.

In the present embodiment, (A), (B), and (B1) to (B3) explained above in the preparation step are performed by causing the computer 31 to execute the program PR.

In the present embodiment, the processing in step S21 is equivalent to (A) explained above. The processing in steps S22 to S29 is equivalent to (B) explained above. Furthermore, the processing in step S22 is equivalent to (B1) explained above. The processing in steps S24 and S25 is equivalent to (B2) explained above. The processing in steps S26 and S27 is equivalent to (B3) explained above.

In the printing method, (B2) explained above for calculating the matching degrees MD at the plurality of positions for each of the feature point candidates RC is performed in the following order of (B21) and (B22).

(B21) Comparing, in the pattern image D1, the first area TM, which is an area including one feature point candidate RC among the plurality of feature point candidates RC, and the second area TA, which is an area, the position of which is moved from the first area TM, to thereby calculate the matching degree MD of the feature point candidate RC.

(B22) While changing at least one of a direction and an amount of moving the second area TA, repeating comparison with the plurality of second areas TA and calculating the matching degrees MD at the plurality of positions with respect to the feature point candidate RC.

### Production step processing

Next, production step processing, which is processing of the production step, is explained with reference to FIG. 31. The production step processing is also explained assuming that the control unit 30 is the entity of the processing. However, specifically, the computer 31 of the control unit 30 executes processing in steps.

In step S31, the control unit 30 executes pattern imaging data acquisition processing. In this processing, the control unit 30 causes the imaging unit 14 to image the medium 99. Accordingly, the control unit 30 acquires the pattern imaging data D3 (see FIG. 7).

In step S32, the control unit 30 numbers the N feature points R0 and sets n = 1 as an initial value of the numbering. That is, the control unit 30 sets n of an n-th feature point to "1". When a total number of feature points R0 is represented as N, n = 1, 2, ..., N.

In step S33, the control unit 30 sets the comparison area TP including the n-th feature point R0. That is, the control unit 30 sets the comparison area TP including the n-th feature point R0 as a template to be used in template matching processing explained below.

In step S34, the control unit 30 executes template matching on the pattern captured image D3 using the comparison area TP. That is, the control unit 30 executes the template matching processing on the pattern imaging data D3 using the comparison area TP as a template. As a result of the template matching, the control unit 30 calculates the matching degree MD between the comparison area TP and the surrounding area SA2 in the pattern captured image D3.

In step S35, the control unit 30 executes deviation calculation processing. Based on the matching degree MD obtained as the result of the template matching, the control unit 30 calculates a position having a high matching degree MD as the displacement point R1 that is a position of a displacement destination of the feature point R0. The control unit 30 calculates the deviation V1 (see FIG. 12) from the feature point R0 toward the displacement point R1. The deviation V1 is indicated by, for example, a vector including a direction component and a movement amount component (a distance component).

In step S36, the control unit 30 determines whether n has reached n = N. That is, the control unit 30 determines whether the deviations V1 from the displacement points R1 having the high matching degrees MD calculated based on the template matching processing for all of the N feature points R0 have been calculated. When n has not reached n = N, the control unit 30 proceeds to step S37. On the other hand, when n has reached n = N because the calculation of the deviations V1 has ended for all the feature points R0, the control unit 30 proceeds to step S38.

In step S37, the control unit 30 sets n = n+1. That is, the control unit 30 sets n = 2 by incrementing the value n and switches the target feature point R0 to the next second feature point R0. After incrementing n, the control unit 30 returns to step S33.

In steps S33 to S35, the control unit 30 executes, for the second feature point R0, the same processing as the processing for the first feature point R0. That is, the control unit 30 calculates the matching degree MD between the comparison area TP and the comparison target area CA using the comparison area TP including the second feature point R0 as a template image and while moving the comparison target area CA in the surrounding area SA2 of the pattern imaging data D3. Then, the control unit 30 calculates the displacement point R1 that is a position having a high matching degree MD with the feature point R0. Furthermore, the control unit 30 calculates the deviation V1 (see FIG. 12) that is a difference (a displacement vector) of a position from the feature point R0 toward the displacement point R1.

Similarly, the control unit 30 calculates the deviations V1 between the n-th feature point R0 and the n-th displacement point R1 by repeatedly executing the processing in steps S33 to S35 while sequentially incrementing n to n = 3,4, ..., and N. In this way, the deviations V1 indicating, for each of the N feature points R0, the differences between the N feature points R0 and the displacement points R1 as vectors are acquired. Based on the pattern image data D1 and the pattern imaging data D3, the control unit 30 creates the deviation data D8 that is data of the N deviations V1 illustrated in FIG. 13. The control unit 30 saves the deviation data D8 in the storage unit 32.

In step S38, the control unit 30 corrects the print image data D2 based on the N deviations V1. For example, as illustrated in FIG. 13, the control unit 30 creates the corrected print image data D4 by correcting the pattern P3 of the print image data D2 based on the deviations V1. Positions equivalent to the feature points R0 in the print image data D2 illustrated in FIG. 13 are represented as G0 and positions obtained by displacing the positions G0 based on the deviations V1 are represented as displaced positions G1. The corrected print image data D4 is corrected print image data having the pattern P4 obtained by deforming the pattern P3 of the print image data D2 based on the N deviations V1. The image correcting unit 42 corrects the print image data D2 to the corrected print image data D4 by performing linear interpolation processing based on the deviation V1 in a process of the deformation processing from the pattern P3 to the pattern P4.

In step S39, the control unit 30 executes corrected print image printing processing. Accordingly, the control unit 30 prints, on the medium 99, a corrected print image that is based on the corrected print image data D4. Specifically, the control unit 30 prints the corrected print image on the medium 99 by controlling the printing unit 12 and the conveyance unit 13 based on the corrected print image data D4.

In the present embodiment, the production step in the printing method is performed by the processing explained above executed by the control unit 30. The production step in the present embodiment includes the following (C) to (G).

(C) Imaging the pattern P1 of the medium 99 conveyed by the conveyance unit 13 with the imaging unit 14 to acquire the pattern captured image D3 including the imaged pattern P1.

(D) Setting the comparison area TP including the feature point R0 in the acquired pattern captured image D3.

(E) Calculating the deviation V1 between the pattern image D1 and the pattern captured image D3 based on the feature point R0 included in the comparison area TP.

(F) Correcting the print image D2 based on the calculated deviation V1 to acquire the corrected print image D4.

(G) Printing the corrected print image D4 on the medium 99.

In the present embodiment, (C) to (G) explained above in the production step are performed by causing the computer 31 to execute the program PR.

In the production step, the processing in step S31 is equivalent to (C) explained above. In the production step, the processing in step S33 is equivalent to (D) explained above. In the production step, the processing in steps S34 and S35 is equivalent to (E) explained above. In the production step, the processing in step S38 is equivalent to (F) explained above. In the production step, the processing in step S39 is equivalent to (G) explained above.

### Effects of the embodiment

According to the present embodiment, effects explained below can be obtained.
(1) The printing method of the printing apparatus 11 that prints an image on the medium 99 having the pattern P1 includes the preparation step and the production step. The production step prints, on the medium 99, the corrected print image D4 obtained by correcting the print image D2 based on the deviation V1 for each of the feature points R0 obtained by performing the matching processing on the pattern captured image D3 obtained by imaging the medium 99 before printing using the feature points R0 of the pattern image D1 indicating the image of the pattern P1 without distortion. The preparation step sets the feature points R0 before the production step. The preparation step includes the following (A) and (B).
   (A) Acquiring the pattern image D1.
   (B) Setting the feature point R0 in the acquired pattern image D1.

The setting of the feature point R0 in (B) explained above includes the following (B1) to (B3).

(B1) Assigning the plurality of feature point candidates RC to the pattern image D1.

(B2) Performing, in the pattern image D1, matching processing for each of the plurality of feature point candidates RC to thereby calculate the matching degrees MD at a plurality of positions for each of the feature point candidates RC.

(B3) Setting, as the feature point R0, the feature point candidate RC, the matching degree MD of which satisfies the predetermined condition, among the plurality of feature point candidates RC.

According to this method, it is possible to set appropriate feature points R0 in the preparation step. Thus, by printing the corrected print image D4 on the medium 99 in the production step, it is possible to print the print image D4 at an appropriate position with respect to the pattern P1 of the medium 99 without being affected by distortion or the like of the medium 99.

(2) In the printing method, (B2) explained above for calculating the matching degrees MD at the plurality of positions for each of the feature point candidates RC is performed in the following order of (B21) and (B22).

(B21) Comparing, in the pattern image D1, the first area TM, which is an area including one feature point candidate RC among the plurality of feature point candidates RC, and the second area TA, which is an area, the position of which is moved from the first area TM, to thereby calculate the matching degree MD of the feature point candidate RC.

(B22) While changing at least one of a direction and an amount of moving the second area TA, repeating comparison with the plurality of second areas TA and calculating the matching degrees MD at the plurality of positions with respect to the predetermined feature point candidate RC.

With this method, in the preparation step, it is possible to set appropriate feature points R0 with template matching using the first area TM as a template.

(3) The production step includes the following (C) to (G).

(C) Imaging the pattern P1 of the medium 99 conveyed by the conveyance unit 13 with the imaging unit 14 to acquire the pattern captured image D3 including the imaged pattern P1.

(D) Setting the comparison area TP including the feature point R0 in the acquired pattern captured image D3.

(E) Calculating the deviation V1 between the pattern image D1 and the pattern captured image D3 based on the feature point R0 included in the comparison area TP.

(F) Correcting the print image D2 based on the calculated deviation V1 to acquire the corrected print image D4.

(G) Printing the corrected print image D4 on the medium 99.

With this method, since the print image D2 is corrected based on the deviation V1 between the pattern image D1 and the pattern captured image D3 obtained by imaging the medium 99, it is possible to print the pattern P4 of the print image D4 at an appropriate position corresponding to the distortion of the pattern P1 of the medium 99.

(4) The predetermined condition is that there is one peak in a three-dimensional distribution in which the matching degrees MD are indicated by a point cloud with respect to position coordinates in the pattern image D1. With this method, since the predetermined condition is that there is one peak, it is possible to set appropriate feature points R0.

(5) The predetermined condition is that a group of the matching degrees MD satisfying excess of the threshold SH among the matching degrees MD at the plurality of positions gathers in one area. With this method, since the predetermined condition is that the group of the matching degrees MD satisfying excess of the threshold SH among the plurality of matching degrees MD gathers in one area, it is possible to set appropriate feature points R0.

(6) The number of the plurality of feature point candidates RC assigned to the pattern image D1 can be changed. With this method, by optimizing the number of the plurality of feature point candidates RC assigned to the pattern image D1, it is possible to set appropriate feature points R0 with high processing efficiency.

(7) An amount of changing the second area TA when calculating the matching degree MD can be changed. With this method, it is possible to set appropriate feature points R0 with high processing efficiency by optimizing the amount of changing the second area TA when calculating the matching degree MD.

(8) The printing apparatus 11 prints an image on the medium 99 having the pattern P1. The printing apparatus 11 includes the conveyance unit 13 that conveys the medium 99 and the imaging unit 14 that acquires the pattern captured image D3 including the imaged pattern P1 by imaging the pattern P1 of the medium 99 conveyed by the conveyance unit 13. The printing apparatus 11 includes the feature point setting unit 41, the image correcting unit 42, and the printing unit 12. The feature point setting unit 41 sets the feature points R0 in the pattern image D1 indicating an image of the pattern P1 without distortion. The image correcting unit 42 corrects the print image D2 based on deviations for each of the feature points R0 between the pattern image D1 and the pattern captured image D3. The corrected print image D4 is printed on the medium 99 conveyed by the conveyance unit 13. The feature point setting unit 41 includes the feature point candidate assigning unit 51, the matching degree acquiring unit 52, and the determination unit 53. The feature point candidate assigning unit 51 assigns the plurality of feature point candidates RC to the pattern image D1. The matching degree acquiring unit 52 calculates the matching degrees MD at a plurality of positions for each of the feature point candidates RC by performing matching processing for each of the plurality of feature point candidates RC in the pattern image D1. The determination unit 53 determines whether the matching degrees MD at the plurality of positions satisfy a predetermined condition. The feature point setting unit 41 sets, as the feature points R0, the feature point candidates RC, the matching degrees MD of which satisfy the predetermined condition, among the plurality of feature point candidates RC. With this configuration, the feature point setting unit 41 can set appropriate feature points R0. Thus, by printing, on the medium 99, the corrected print image D4 corrected based on the deviations calculated using the feature points R0, it is possible to print the print image D4 at an appropriate position with respect to the pattern P1 of the medium 99 without being affected by distortion or the like of the medium 99.

(9) The image correcting unit 42 includes the comparison area setting unit 54 and the deviation calculating unit 55. The comparison area setting unit 54 sets the comparison areas TP including the feature points R0 in the pattern image D1. The deviation calculating unit 55 calculates the deviations V1 for each of the feature points R0 between the pattern image D1 and the pattern captured image D3 based on the feature points R0 included in the comparison areas TP. The corrected print image D4 is acquired by correcting the print image D2 based on the deviations V1. With this configuration, it is possible to acquire appropriate deviations V1 based on the matching degrees MD with the feature points R0 using the comparison areas TP including the feature points R0 as templates. Thus, it is possible to set appropriate feature points R0 with high processing efficiency.

(10) The program PR is a program for causing the computer 31 to execute processing of setting setting information used for correction of the print image D2 used by the printing apparatus 11, which prints an image on the medium 99 having the pattern P1, when printing the image. The printing apparatus 11 includes the imaging unit 14 that images the medium 99 being conveyed at a position before printing and the printing unit 12 that prints, on the medium 99, the corrected print image D4 obtained by correcting the print image D2 based on the deviations V1 for each of the feature points R0 obtained by performing the matching processing on the pattern captured image D3 obtained by the imaging unit 14 imaging the pattern P1 of the medium 99 using the feature points R0 of the pattern P2. The program PR causes the computer 31 to execute processing of setting the feature points R0 serving as setting information.

The program PR causes the computer 31 to execute the following (A) and (B). (B) further includes (B1), (B2) and (B3).
(A) Causing the computer 31 to acquire the pattern image D1 indicating an image of the pattern P2 without distortion.
(B) Causing the computer 31 to set the feature points R0 in the acquired pattern image D1.

In the setting of the feature points R0, (B1) causing the computer 31 to assign the plurality of feature point candidates RC to the pattern image D1.

(B2) Causing the computer 31 to calculate the matching degrees MD at a plurality of positions for each of the feature point candidates RC by performing matching processing for each of the plurality of feature point candidates RC in the pattern image D1. (B3) Causing the computer 31 to set the feature point candidates RC, the matching degrees MD of which satisfy the predetermined condition, among the plurality of feature point candidates RC as the feature points R0.

With the program PR, it is possible to set appropriate feature points R0 in the preparation step by causing the computer 31 to execute the program PR. Thus, by printing the corrected print image D4 on the medium 99 in the production step, it is possible to print the print image D4 at an appropriate position with respect to the pattern P1 without being affected by distortion or the like of the medium 99.

### Modifications

The present embodiment can be implemented by being changed as explained below. The present embodiment and modifications explained below can be implemented in combination with each other as long as no technical inconsistencies are involved.

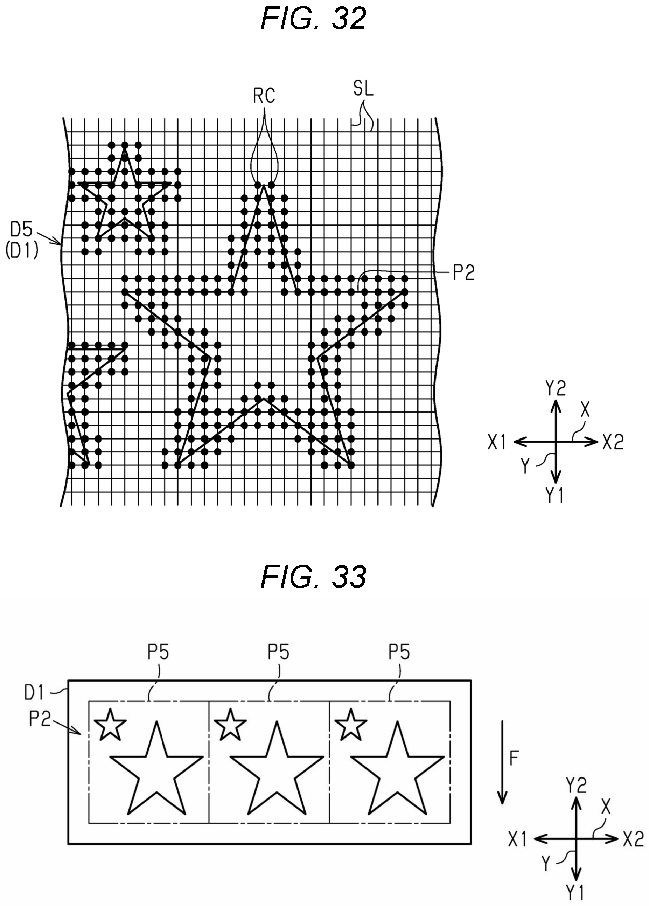

As illustrated in FIG. 32, the feature point candidates RC may be assigned to only some of all intersections of the division lines SL extending vertically and horizontally on the pattern image D1. For example, the feature point candidate assigning unit 51 may assign the feature point candidates RC to grid points equivalent to vertexes of a cell area where a part of the pattern P2 illustrated in FIG. 32 is present. The feature point candidate assigning unit 51 may assign the feature point candidates RC to intersections where parts of the pattern P2 illustrated in FIG. 32 are present. For example, the feature point candidate assigning unit 51 may perform binarization processing on the pattern image data D1 under a binarization condition that a pattern and a background have different values and perform processing of selecting a cell area where a part of the pattern P2 is present in a binarized image. The feature point candidate assigning unit 51 may assign the feature point candidates RC to only vertices of the selected cell area. The feature point candidate assigning unit 51 may select intersections where parts of the pattern P2 are present in the binarized image and assign the feature point candidates RC to only the selected intersections. As explained above, the feature point candidate assigning unit 51 may determine the presence or absence of the pattern P2 at the cell areas divided by the division lines SL or the intersections of the division lines SL on the pattern image data D1 and assign the feature point candidates RC only to at least some vertices or intersections of the cell area determined as having the pattern P2. With this printing method, since a processing load of the setting processing for the feature point candidates RC can be reduced, it is possible to increase the feature point setting processing in speed.

As illustrated in FIG. 33, the pattern P2 of the pattern image data D1 may include a plurality of unit patterns P5 that are parts of the pattern P2. In this case, the feature point setting unit 41 may acquire and set a plurality of feature points R0 only for one unit pattern P5 and copy the plurality of feature points R0 set for the one unit pattern P5 to positions respectively corresponding to the other unit patterns P5. For example, in an example illustrated in FIG. 33, the pattern P2 of the pattern image D1 includes a plurality of unit patterns P5 that repeatedly appear in a predetermined direction (for example, the width direction X). The feature point setting unit 41 performs matching processing on the unit patterns P5 based on the feature point candidates RC and sets the feature point candidates RC, the matching degrees MD of which satisfy a predetermined condition, as the feature points R0. Furthermore, the feature point setting unit 41 copies the plurality of feature points R0 set in the one unit pattern P5 to the other unit patterns P5. Accordingly, the feature points R0 are set in the pattern image D1. With the printing method or the printing apparatus 11, it is sufficient to perform the matching processing using at least one unit pattern P5 as an input image. Thus, it is possible to reduce a processing load for setting the feature points R0. A division method for the unit pattern P5 only has to be able to divide the unit pattern P5 into divided areas including the unit pattern P5 and may divide the entire pattern image D1 into a plurality of areas or locally set an area including the unit pattern P5.

The imaging unit 14 is not limited to a fixed type and may be a movable type. For example, the imaging unit 14 may be a movable type movable in the width direction of the medium 99. In this case, the imaging unit 14 may be fixed to the printing unit 12 or may be provided to be movable in the width direction X separately from the printing unit 12 as long as the printing unit 12 is a serial type movable in the width direction X. The imaging unit 14 is provided at a position further upstream in the conveyance direction F than the printing unit 12. The imaging unit 14 may be provided at a position further downstream in the conveyance direction F than the printing unit 12 as long as the deviation V1 can be calculated with constant accuracy based on a captured image of the medium 99 after printing.

An appropriate condition may be adopted as the predetermined condition. The predetermined condition may be that an average value of the matching degrees MD at a plurality of positions is equal to or greater than the threshold SH. For example, the determination unit 53 may be configured to calculate an average value of the matching degrees MD at the plurality of positions and, when determining that the average value satisfies the predetermined condition of being equal to or greater than the threshold SH, set the feature point candidates RC as the feature points R0. The determination by the average value of the matching degrees MD may be combined with determination by another method. The determination of the other method may be determination using variance of the matching degrees MD or variance of a point cloud, an average value of which exceeds the threshold SH. For example, the determination unit 53 does not set the feature point candidates RC as the feature points R0 when the point cloud of the matching degrees MD is discrete based on a variance value and sets the feature point candidates RC as the feature points R0 when the point cloud of the matching degrees MD gathers in one area.

Only one of the matching degrees Px and Py in the embodiment may be adopted and the predetermined condition may be satisfying a condition that the adopted one of the matching degrees Px and Py is equal to or greater than the threshold SH.

A gradient (a tilt) of the distribution of the matching degrees MD may be calculated and satisfying a condition that the gradient converges to one peak may be one of predetermined conditions. For example, the predetermined condition may be satisfying a condition that the gradient is a gradient ascending toward the coordinates (0,0) of the feature point candidate RC in both the X and Y directions.

A condition for determining, based on the shape and the size of an intersection line parallel to the XY plane and intersecting a virtual plane passing through the threshold SH, whether a curved surface approximating the distribution of the matching degrees MD has one peak may be adopted as one of the predetermined conditions. The predetermined condition may be another condition under which it can be determined that the distribution of the matching degrees MD converges to one peak.

Any feature point only has to be adopted as the feature point. For example, a feature value using a gray-level co-occurrence matrix (GLCM) may be adopted as the feature point.

The template matching (the pattern matching) may be normalized correlation pattern matching, geometric shape pattern matching, or the like.

The matching processing is not limited to the template matching processing. Other matching processing belonging to feature-based matching processing or area-based matching processing may be adopted. When the imaging unit 14 captures a moving image of the medium 99, matching processing using an optical flow method or the like may be adopted. When the pattern P1 is gradually deformed during conveyance, a deformation position of the pattern P1 at a printing position may be estimated from an obtained movement vector and the print image D2 may be corrected based on the deviations V1 of a result of the estimation.

The respective kinds of matching processing of the preparation step and the production step may be the same or may be different.

When the number of the plurality of feature point candidates RC to be assigned to the pattern image D1 can be changed, the control unit 30 (the feature point setting unit 41) may automatically calculate an appropriate number of feature point candidates RC. For example, the control unit 30 (the computer 31) may automatically calculate the dimension Lx that determines the cell size. The control unit 30 may determine the cell size (for example, the dimension Lx) by determining whether the number of feature points R0 obtained by executing the same processing as the preparation step processing in a simulation is within an allowable range. The control unit 30 corrects the cell size (for example, the dimension Lx) to a large value when the number of obtained feature points R0 exceeds an upper limit of the allowable range and corrects the cell size (for example, the dimension Lx) to a small value when the number of obtained feature points R0 is smaller than a lower limit of the allowable range. By setting the interval (the dimension Lx) of the lattice-shaped division lines SL to an appropriate value, it is possible to implement an increase in feature point setting processing speed and optimization of a set number of the feature points R0.

The control unit 30 (the computer 31) may automatically calculate a dimension that determines the size of the surrounding area SA2 used in the production step.

When an amount of changing the second area TA when calculating the matching degree MD can be changed, the control unit 30 (the feature point setting unit 41) may automatically calculate an appropriate amount of changing the second area TA.

The feature point candidate assignment processing and the matching processing may be performed after the down-scale processing of reducing the resolution of the pattern image data D1 is performed.

The feature point setting unit 41 may perform matching processing after performing, for example, image processing suitable for edge detection on the pattern image data D1 as preprocessing.

The preparation step and the production step are not limited to being performed by causing the computer 31 to execute the program PR. For example, the preparation step and the production step may be implemented by hardware by an electronic circuit (for example, a semiconductor integrated circuit) such as a field-programmable gate array (FPGA) or an application specific IC (ASIC) or may be implemented by cooperation of software and hardware. At least the preparation step of the preparation step and the production step may be performed by causing the computer 31 to execute the program PR. Furthermore, both of the production step and the preparation step may be implemented by a hardware portion of the control unit 30.

In the embodiment explained above, the computer 31 of the printing apparatus 11 is caused to execute the program PR. However, for example, a computer of a host apparatus communicably connected to the printing apparatus 11 may be caused to execute the program PR. The computer 31 of the printing apparatus 11 may be caused to execute a program relating to the production step processing in the program PR and the computer of the host apparatus may be caused to execute a program relating to the preparation step processing in the program PR. The host apparatus is, for example, a personal computer, a portable information terminal (Personal Digital Assistants (PDA)), a tablet PC, or a smartphone.

A feature value for specifying the feature point R0 is not limited to shape-related information such as a line portion and a corner portion and may include luminance information such as a gradient and a gradient direction of luminance.

The pattern P1 of the medium 99 is not limited to a pattern formed by jacquard weaving and may be a weave pattern woven by another method. The pattern P1 of the medium 99 is not limited to a weave pattern and may be applied by dyeing (resist dyeing or the like) such as tie-dyeing. Furthermore, the pattern P1 of the medium 99 may be a printed pattern.

A positional relationship between the patterns P1 and P3 may be optional without being limited to printing for superimposing the pattern P3 of the print image D2 on the pattern P1 of the medium 99. The pattern P3 may be the pattern P3 that colors an inner area of a contour line of the pattern P1, a pattern P3 formed of a line or a band printed at a position along and adjacent to the pattern P1, a pattern P3 that gives a contour line to the pattern P1, or the like. The pattern P1 may be a part of one pattern and the pattern P3 may be another part of the one pattern.

The pattern P1 of the medium 99 may be already printed on the second surface 99B and the pattern P3 of the print image D2 may be printed on the first surface 99A of the medium 99 while being aligned with the pattern P1.

The pattern P1 is not limited to being formed on the medium 99 by weaving. The pattern P1 may be embroidery or may be a dyed pattern. Furthermore, the pattern P1 may be a printed pattern. For example, the medium 99 may be the medium 99 on which the pattern P1 is printed by primary printing and the pattern P3 is printed by secondary printing.

The medium 99 is not limited to a woven fabric such as a jacquard fabric and may be nonwoven fabric. Furthermore, the medium 99 is not limited to a fabric including a woven fabric, a nonwoven fabric, or the like and may be knitted fabric. The medium 99 may be paper, artificial or natural leather, a sheet or a film made of synthetic resin, a sheet, a film, or metal foil made of metal, a ceramic sheet, a laminate sheet made of a composite of resin and metal, clothing, or the like. The pattern P1 may be a pattern by embossing (engraving) in the case of the leather or a pattern by metal carving in the case of the metal sheet. Furthermore, the pattern P1 may be a pattern by laser machining.

The medium 99 is not limited to a long fabric or the like wound around a roll body. The medium 99 may be a single sheet medium cut to predetermined length.

When the printing apparatus 11 is a liquid ejecting apparatus that ejects ink as an example of liquid, the liquid can be optionally selected as long as the liquid can be recorded on the medium 99 by adhering to the medium 99. For example, the ink includes ink formed by dissolving, dispersing, or mixing, in a solvent, particles of a functional material including solid matters such as pigment or metal particles and includes various compositions such as aqueous ink, oil-based ink, gel ink, and hot melt ink.

The printing apparatus 11 is not limited to a liquid ejecting apparatus of an inkjet type and may be a dot impact printer or an electrophotographic printer. The printing apparatus 11 is not limited to a print-only machine and may be a multifunction peripheral having a copy function and a scanner function. Furthermore, the printing apparatus 11 may be any one of a serial printer, a line printer, and a page printer.

The printing apparatus 11 may not include the conveyance unit 13. For example, the printing apparatus 11 may include a table on which the medium 99 is placed and may perform printing on the medium 99 according to movement of the printing unit 12. In this case, the imaging unit 14 may be provided at a position facing a placement surface of the table.

The printing apparatus 11 may not include the imaging unit 14. For example, the pattern P1 of the medium 99 may be imaged by the imaging unit 14 disposed at a high place such as a ceiling in a factory such that a portion of the medium 99 exposed from a housing of the printing apparatus 11 can be imaged. In this case, the imaging unit 14 may be movable and shared among a plurality of printing apparatuses 11.

The imaging unit 14 may image the second surface 99B of the medium 99. The imaging unit 14 may acquire the pattern P1 of the first surface 99A by imaging the pattern P1 of the second surface 99B. In this case, the image correcting unit 42 may acquire the pattern imaging data D3 by performing, on captured image data acquired from the imaging unit 14, image processing such as pattern inversion processing or highlighting processing of highlighting the pattern P1 of the first surface 99A from the pattern on the second surface 99B.

The expression "at least one of" used in the present specification means one or more of desired options. As an example, when the number of options is two, the expression "at least one of" used in the present specification means just one of the options or both of the two options. As another example, when the number of options is three or more, the expression "at least one of" used in the present specification means just one of the options or a combination of any two or more of the options.

### Appendices

Technical ideas understood from the embodiment and the modifications explained above and action effects of the technical ideas are described below. The technical ideas and the action effects thereof can be combined with each other within a range where no technical contradictions are involved.
[1] A printing method of a printing apparatus that prints an image on a medium having a pattern, the printing method including: a production step of printing, on the medium, a print image corrected based on a deviation for each feature point of a pattern image indicating an image of the pattern without distortion, the deviation being obtained by performing, using the feature point, matching processing on a pattern captured image obtained by imaging the medium at a position before printing; and a preparation step of setting the feature point before the production step, wherein the preparation step includes: acquiring the pattern image; and setting the feature point in the acquired pattern image, and the setting the feature point includes: assigning a plurality of feature point candidates to the pattern image; calculating matching degrees at a plurality of positions for each of the plurality of feature point candidates by performing the matching processing on each of the feature point candidates in the pattern image; and setting, as the feature point, the feature point candidate, the matching degree of which satisfies a predetermined condition, among the plurality of feature point candidates. With this method, it is possible to set appropriate feature points in the preparation step. Thus, by printing the corrected print image on the medium in the production step, it is possible to print the print image at an appropriate position with respect to the pattern of the medium without being affected by distortion or the like of the medium.
[2] In the printing method described in the above [1], as a method of calculating the matching degree for each of the feature point candidates, the matching degrees at a plurality of positions for predetermined feature point candidates may be calculated by comparing, in the pattern image, a first area that is an area including one feature point candidate among the plurality of feature point candidates and a second area that is an area, a position of which is moved from the first area, and, while changing at least one of a direction or an amount of moving the first area, the comparison with a plurality of the second areas may be repeated to calculate the matching degrees at a plurality of positions for predetermined feature point candidates. With this method, in the preparation step, it is possible to set appropriate feature points with template matching using the first area as a template.
[3] In the printing method described in the above [1] or [2], the production step may include: acquiring, with an imaging unit, the pattern captured image by imaging the pattern of the medium conveyed by a conveyance unit; setting a comparison area including the feature point in the acquired pattern captured image; calculating the deviation between the pattern image and the pattern captured image based on the feature point included in the comparison area; correcting the print image based on the calculated deviation to acquire a corrected print image; and printing the corrected print image on the medium. With this method, since the print image is corrected based on the deviation between the pattern image data obtained by imaging the medium and the pattern imaging data, it is possible to print a pattern of the print image at an appropriate position corresponding to distortion of a pattern of an imaged printing target medium.
[4] In the printing method described in any one of the above [1] and [3], the predetermined condition may be that there is one peak in a three-dimensional distribution in which the matching degree is indicated by a point cloud with respect to position coordinates in the pattern image. With this method, since the predetermined condition is that there is one peak, it is possible to set appropriate feature points.
[5] In the printing method described in any one of the above [1] to [4], the predetermined condition may be that a group of matching degrees exceeding a threshold gathers in one area. With this method, since the predetermined condition is that the group of matching degrees exceeding the threshold among a plurality of matching degrees gathers in one area, it is possible to set appropriate feature points.
[6] In the printing method described in any one of the above [1] to [5], a number of a plurality of the feature point candidates assigned to the pattern image may be changeable. With this method, it is possible to set appropriate feature points with high processing efficiency by optimizing the number of the plurality of feature point candidates assigned to the pattern image data.
[7] In the printing method described in any one of the above [1] to [6], an amount of changing the second area when calculating the matching degree may be changeable. With this method, it is possible to set appropriate feature points with high processing efficiency by optimizing the amount of changing the second area when calculating the matching degree.
[8] In the printing method described in any one of the above [1] to [7], the pattern of the pattern image may include a plurality of unit patterns that are parts of the pattern, and the matching processing may be performed on the unit pattern to set the feature point candidate, the matching degree of which satisfies the predetermined condition, as the feature point, and the feature point may be set in the pattern image by copying the feature point of the unit pattern to other unit patterns. With this method, it is sufficient to perform the matching processing using at least one unit pattern as an input image. Thus, it is possible to reduce a processing load for setting feature points.
[9] A printing apparatus that prints an image on a medium having a pattern, the printing apparatus including: a conveyance unit configured to convey the medium; an imaging unit configured to acquire a pattern captured image by imaging the pattern of the medium conveyed by the conveyance unit; a feature point setting unit configured to set a feature point in a pattern image indicating an image of the pattern without distortion; an image correcting unit configured to correct a print image based on a deviation for each feature point between the pattern image and the pattern captured image; and a printing unit configured to print the corrected print image on the medium conveyed by the conveyance unit, wherein the feature point setting unit includes: a feature point candidate assigning unit configured to assign a plurality of feature point candidates to the pattern image; a matching degree acquiring unit configured to acquire matching degrees at a plurality of positions for each of the feature point candidates by performing matching processing on each of the plurality of feature point candidates in the pattern image; and a determination unit configured to determine whether the matching degrees at the plurality of positions satisfy a predetermined condition, and the feature point candidate, the matching degree of which satisfies the predetermined condition, among the plurality of feature point candidates is set as the feature point. With this configuration, the feature point setting unit can set appropriate feature points. Therefore, by printing, on the medium, the corrected print image corrected based on the deviation calculated using the feature point, it is possible to print the print image at an appropriate position with respect to the pattern of the medium without being affected by distortion or the like of the medium.
[10] In the printing apparatus described in the above [9], the image correcting unit may include: a comparison area setting unit configured to set a comparison area where the feature point is included in the pattern image; and a deviation calculating unit configured to calculate the deviation for each feature point between the pattern image and the pattern captured image based on the feature point included in the comparison area. With this configuration, it is possible to acquire an appropriate deviation by calculating an appropriate displacement point based on the matching degree with the feature point using the comparison area including the feature point as a template. Thus, it is possible to set appropriate feature points with high processing efficiency.
[11] A non-transitory computer-readable storage medium storing a program for causing a computer to execute processing of setting setting information used to correct a print image used when a printing apparatus, which prints an image on a medium having a pattern, prints the image, the printing apparatus including: an imaging unit configured to image the medium before printing to acquire a pattern captured image; and a printing unit configured to print, on the medium, a print image corrected based on a deviation for each feature point obtained by matching processing on the pattern captured image using the feature point of the pattern, the program causing the computer to execute processing of setting the feature point as the setting information and including causing the computer to execute: acquiring a pattern image indicating an image of the pattern without distortion; and setting the feature point in the acquired pattern image, and, in the setting of the feature point, assigning a plurality of feature point candidates to the pattern image; calculating matching degrees at a plurality of positions for each of the feature point candidates by performing matching processing on each of the plurality of feature point candidates in the pattern image; and setting, as the feature point, the feature point candidate, the matching degree of which satisfies a predetermined condition, among the plurality of feature point candidates. With this program, it is possible to set appropriate feature points in the preparation step by causing the computer to execute the program. Thus, by printing the corrected print image on the medium in the production step, it is possible to print the print image at an appropriate position with respect to the pattern of the medium without being affected by distortion or the like of the medium.

## Claims

1. A printing method of a printing apparatus that prints an image on a medium having a pattern, the printing method comprising:
a production step of printing, on the medium, a print image corrected based on a deviation for each feature point of a pattern image indicating an image of the pattern without distortion, the deviation being obtained by performing, using the feature point, matching processing on a pattern captured image obtained by imaging the medium at a position before printing; and
a preparation step of setting the feature point before the production step, wherein
the preparation step includes:
acquiring the pattern image; and
setting the feature point in the acquired pattern image, and
the setting the feature point includes:
assigning a plurality of feature point candidates to the pattern image;
calculating matching degrees at a plurality of positions for each of the plurality of feature point candidates by performing the matching processing on each of the feature point candidates in the pattern image; and
setting, as the feature point, the feature point candidate, the matching degree of which satisfies a predetermined condition, among the plurality of feature point candidates.

2. The printing method according to claim 1, wherein, as a method of calculating the matching degree for each of the feature point candidates, the matching degrees at a plurality of positions for predetermined feature point candidates are calculated by comparing, in the pattern image, a first area that is an area including one feature point candidate among the plurality of feature point candidates and a second area that is an area, a position of which is moved from the first area, and, while changing at least one of a direction or an amount of moving the first area, the comparison with a plurality of the second areas is repeated to calculate the matching degrees at a plurality of positions for predetermined feature point candidates.

3. The printing method according to claim 1, wherein the production step includes:
acquiring, with an imaging unit, the pattern captured image by imaging the pattern of the medium conveyed by a conveyance unit;
setting a comparison area including the feature point in the acquired pattern captured image;
calculating the deviation between the pattern image and the pattern captured image based on the feature point included in the comparison area;
correcting the print image based on the calculated deviation to acquire a corrected print image; and
printing the corrected print image on the medium.

4. The printing method according to claim 1, wherein the predetermined condition is that there is one peak in a three-dimensional distribution in which the matching degree is indicated by a point cloud with respect to position coordinates in the pattern image.

5. The printing method according to claim 1, wherein the predetermined condition is that a group of matching degrees exceeding a threshold gathers in one area.

6. The printing method according to claim 1, wherein a number of a plurality of the feature point candidates assigned to the pattern image is changeable.

7. The printing method according to claim 2, wherein an amount of changing the second area when calculating the matching degree is changeable.

8. The printing method according to claim 1, wherein
the pattern of the pattern image includes a plurality of unit patterns that are parts of the pattern, and
the matching processing is performed on the unit pattern to set the feature point candidate, the matching degree of which satisfies the predetermined condition, as the feature point, and the feature point is set in the pattern image by copying the feature point of the unit pattern to other unit patterns.

9. A printing apparatus that prints an image on a medium having a pattern, the printing apparatus comprising:
a conveyance unit configured to convey the medium;
an imaging unit configured to acquire a pattern captured image by imaging the pattern of the medium conveyed by the conveyance unit;
a feature point setting unit configured to set a feature point in a pattern image indicating an image of the pattern without distortion;
an image correcting unit configured to correct a print image based on a deviation for each feature point between the pattern image and the pattern captured image; and
a printing unit configured to print the corrected print image on the medium conveyed by the conveyance unit, wherein
the feature point setting unit includes:
a feature point candidate assigning unit configured to assign a plurality of feature point candidates to the pattern image;
a matching degree acquiring unit configured to acquire matching degrees at a plurality of positions for each of the feature point candidates by performing matching processing on each of the plurality of feature point candidates in the pattern image; and
a determination unit configured to determine whether the matching degrees at the plurality of positions satisfy a predetermined condition, and
the feature point candidate, the matching degree of which satisfies the predetermined condition, among the plurality of feature point candidates is set as the feature point.

10. The printing apparatus according to claim 9, wherein the image correcting unit includes:
a comparison area setting unit configured to set a comparison area where the feature point is included in the pattern image; and
a deviation calculating unit configured to calculate the deviation for each feature point between the pattern image and the pattern captured image based on the feature point included in the comparison area.

11. A non-transitory computer-readable storage medium storing a program for causing a computer to execute processing of setting setting information used to correct a print image used when a printing apparatus, which prints an image on a medium having a pattern, prints the image, the printing apparatus including:
an imaging unit configured to image the medium before printing to acquire a pattern captured image; and a printing unit configured to print, on the medium, a print image corrected based on a deviation for each feature point obtained by matching processing on the pattern captured image using the feature point of the pattern,
the program causing the computer to execute processing of setting the feature point as the setting information and including causing the computer to execute:
acquiring a pattern image indicating an image of the pattern without distortion; and
setting the feature point in the acquired pattern image, and
in the setting of the feature point,
assigning a plurality of feature point candidates to the pattern image;
calculating matching degrees at a plurality of positions for each of the feature point candidates by performing matching processing on each of the plurality of feature point candidates in the pattern image; and
setting, as the feature point, the feature point candidate, the matching degree of which satisfies a predetermined condition, among the plurality of feature point candidates.
